# EUROPEAN PATENT APPLICATION

(11) **EP 4 546 877 A1**
(43) Date of publication of application: **30.04.2025**
(21) Application number: 23835785.9
(22) Date of filing: 04.07.2023
(51) Int. Cl.: H04W 48/16, H04W 48/08, H04W 28/02, H04W 76/10, H04W 92/02

(54) **ACCESS CONTROL MECHANISM FOR SIGNALING OR DATA FOR INDUSTRIAL TRAFFIC**

(30) Priority: 07.07.2022 KR 20220083721; 03.07.2023 KR 20230085591
(71) Applicant: Intellectual Discovery Co., Ltd., Seoul 06160 (KR)
(72) Inventor: KIM, Jaehyun, Andong-si, Gyeongsangbuk-do 36729 (KR)
(74) Representative: BCKIP Part mbB
(86) International application number: PCT/KR2023/009376
(87) International publication number: WO 2024/010319

(57) **Abstract**

Disclosed is an operation method of a terminal. The operation method may comprise the steps of: receiving system information including access control-related information about industrial signaling and/or data; determining an access identity and an access category when originating industrial signaling or data is generated; performing a test for unified access control on the basis of the access identity, the access category, and the access control-related information; determining the cause of radio resource control (RRC) establishment or RRC resumption on the basis of the access category if the test is passed; and transmitting an RRC message including the determined cause of RRC establishment or RRC resumption.

## Description

### BACKGROUND OF THE DISCLOSURE

### Field of the disclosure

The present disclosure relates to a mobile communication.

### Related Art

With the success of long term evolution (LTE)/LTE-A (LTE-Advanced) for the 4th generation mobile communication, more interest is rising to the next generation, i.e., 5th generation (also known as 5G) mobile communication and extensive research and development are being carried out accordingly.

The 5G mobile communication defined in the international telecommunication union (ITU) provides a data transfer rate of up to 20Gbps and a sensible transfer rate of at least 100Mbps anytime anywhere. 'IMT-2020' is a formal name, and aims to be commercialized in the year 2020 worldwide.

The 5G mobile communication supports a plurality of numerologies or subcarrier spacing (SCS) for supporting various services. For example, when the SCS is 15 kHz, a wide area over conventional cellular bands is supported; in the case of 30 kHz/60 kHz, a dense urban area, lower latency, and wider carrier bandwidth is supported; and when the SCS is larger than 60 kHz or higher, bandwidth larger than 24.25 GHz is supported to overcome phase noise.

The NR frequency band is defined by two types (FR1, FR2) of frequency ranges. The FR1 ranges from 410 MHz to 7125 MHz, and the FR2 ranges from 24250 MHz to 52600 MHz, which may correspond to the millimeter wave (mmW) range.

For the convenience of descriptions, in the frequency range used for the NR system, the FR1 may indicate the "sub-6GHz range" while the FR2 may indicate the "above 6GHz range" and may be referred to as the millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As described above, the numerical values of the frequency ranges in the NR system may be changed. For example, the FR1 may include a frequency band ranging from 410 MHz to 7125 MHz as shown in Table 2. In other words, the FR1 may include a frequency band higher than 6 GHz (or 5850, 5900, or 5925 MHz). For example, a frequency band higher than 6 GHz (or 5850, 5900, or 5925 MHz) included in the FR1 may include the unlicensed band. The unlicensed band may be utilized for various applications, which may include communication for vehicles (for example, autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

The ITU proposes three usage scenarios, e.g., eMBB(enhanced Mobile BroadBand), mMTC(massive Machine Type Communication), and URLLC(Ultra Reliable and Low Latency Communications).

First, the URLLC relates to a usage scenario which requires a high reliability and a low latency. For example, a service such as autonomous driving, factory automation, and augmented reality requires a high reliability and a low latency (e.g., a latency less than or equal to 1ms). At present, a latency of 4G (LTE) is statistically 21-43ms (best 10%), 33-75ms (median). This is insufficient to support a service requiring the latency less than or equal to 1ms.

Next, an eMBB usage scenario relates to a usage scenario requiring a mobile ultra-wide band.

It seems that a core network designed for the existing LTE/LTE-A has difficulty in accommodating a high-speed service of the ultra-wide band.

Therefore, it is urgently required to re-design the core network in 5G mobile communication.

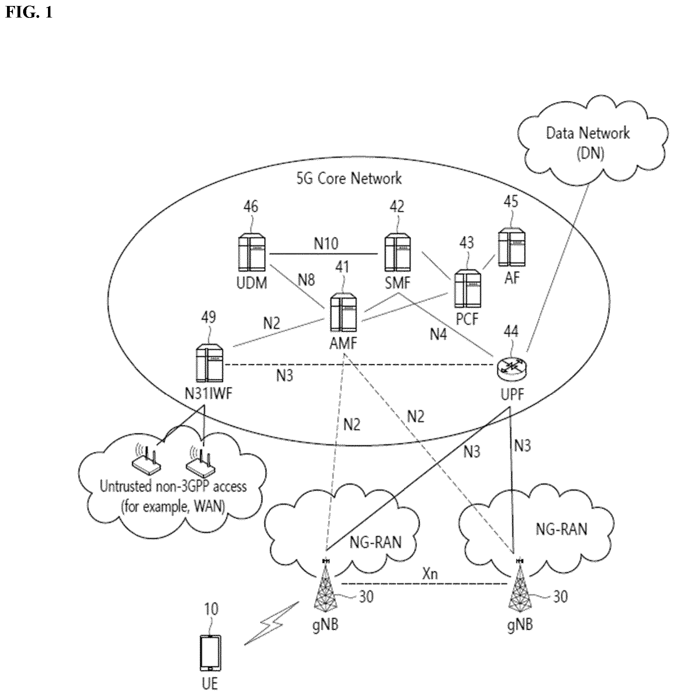

FIG. 1 illustrates a structure of the next-generation mobile communication network.

The 5G Core (5GC) may include various constituting elements, and FIG. 1 shows Access and Mobility Management Function (AMF) 41, Session Management Function (SMF) 42, Policy Control Function (PCF) 43, User Plane Function (UPF) 44, Application Function (AF) 45, Unified Data Management (UDM) 46, and Non-3GPP InterWorking Function (N3IWF) 49, which correspond to part of the constituting elements.

The UE 10 is connected to the data network via the UPF 44 through the Next Generation Radio Access Network (NG-RAN).

The UE 10 may receive a data service even through untrusted non-3rd Generation Partnership Project (3GPP) access, for example, Wireless Local Area Network (WLAN). To connect the non-3GPP access to the core network, the N3IWF 49 may be deployed.

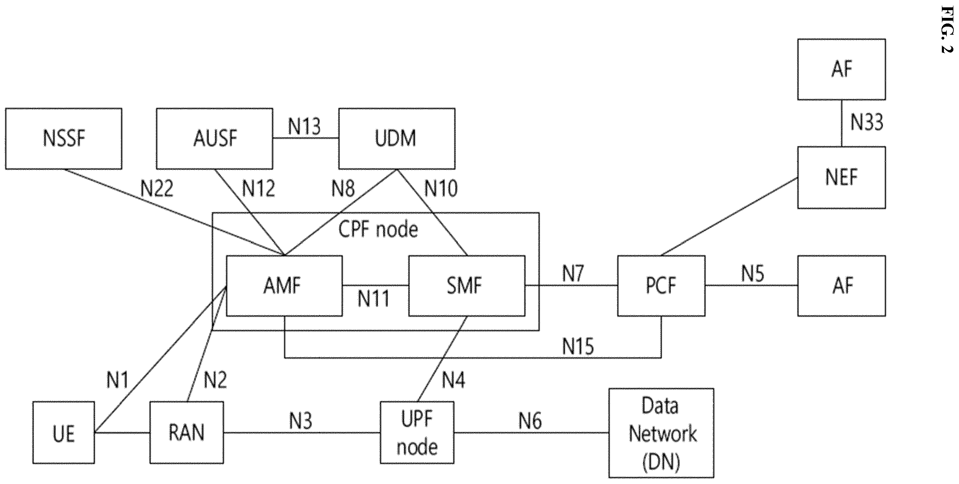

FIG. 2 shows an example of an expected structure of next-generation mobile communication from a node perspective.

As can be seen with reference to FIG. 2, a UE is coupled to a data network (DN) via a next generation radio access network (RAN).

The illustrated control plane function (CPF) node performs the entirety or part of a mobility management entity (MME) function of 4G mobile communication and the entirety or part of a control plane function of an S-serving gateway (SG) and PDN gateway (P-GW). The CPF node includes an access and mobility management function (AMF) and a session management function (SMF).

The illustrated user plane function (UPF) node is a type of a gateway through which user data is transmitted/received. The UPF node may perform the entirety or part of a user plane function of an S-GW or P-GW of 4G mobile communication.

The illustrated policy control function (PCF) is a node which controls a provider's policy.

The illustrated application function (AF) is a server for providing several services to the UE.

The illustrated unified data management (UDM) is a type of a server which manages subscriber information, such as a home subscriber server (HSS) of 4G mobile communication. The UDM stores the subscriber information in a unified data repository (UDR) and manages it.

The illustrated authentication server function (AUSF) authenticates and manages the UE.

The illustrated network slice selection function (NSSF) is a node for network slicing as described below.

In FIG. 2, the UE can simultaneously access two data networks by using multiple protocol data unit or packet data unit (PDU) sessions.

FIG. 3 shows an example of an architecture for supporting simultaneous access to two data networks.

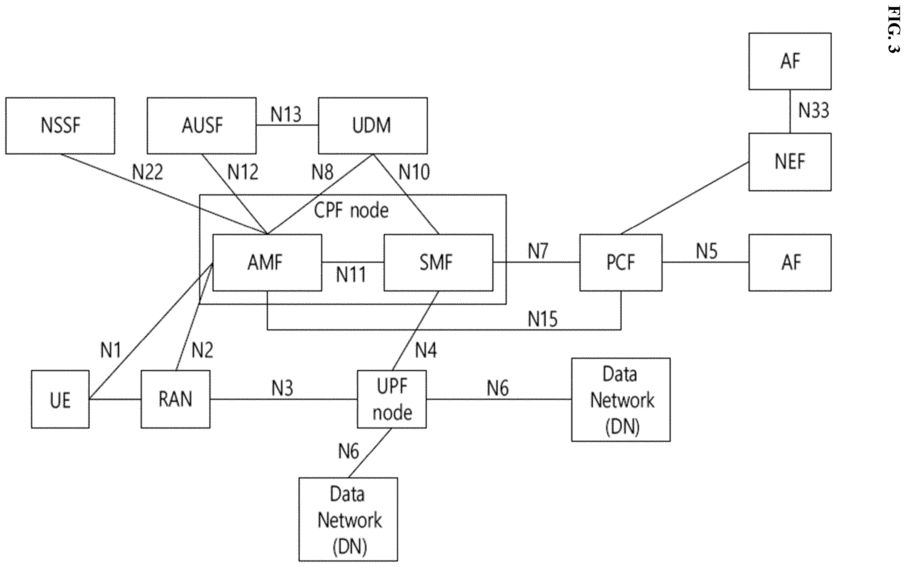

In the architecture shown in FIG. 3, a UE uses one PDU session to simultaneously access the two data networks.

Reference points shown in FIGS. 2 and 3 are as follows.

N1 represents a reference point between the UE and the AMF.

N2 represents a reference point between the (R)AN and the AMF.

N3 represents a reference point between the (R)AN and the AMF.

N4 represents a reference point between the SMF and the UPF.

N5 represents a reference point between the PCF and the AF.

N6 represents a reference point between the UPF and the DN.

N7 represents a reference point between the SMF and the PCF.

N8 represents a reference point between the UDM and the AMF.

N9 represents a reference point between the UPFs.

N10 represents a reference point between the UDM and the SMF.

N11 represents a reference point between the AMF and the SMF.

N12 represents a reference point between the AMF and the AUSF.

N13 represents a reference point between the UDM and the AUSF.

N14 represents a reference point between the AMFs.

N15 represents a reference point between the PCF and the AMF.

N16 represents a reference point between the SMFs.

N22 represents a reference point between the AMF and the NSSF.

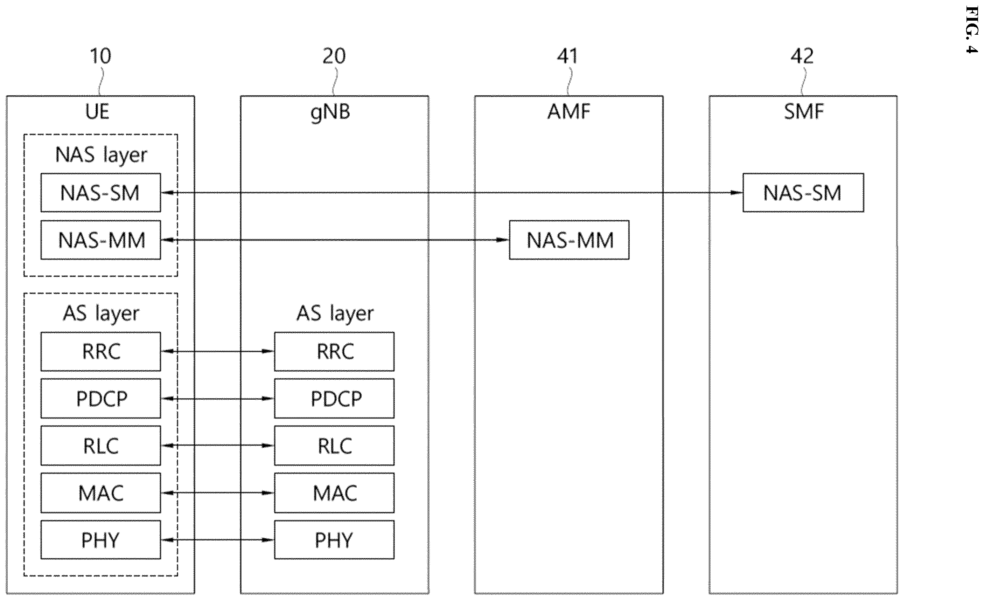

FIG. 4 illustrates another example of a structure of a radio interface protocol between a UE and a gNB.

The radio interface protocol is based on the 3GPP radio access network specification. The radio interface protocol horizontally includes a physical layer, a data link layer, and a network layer; and is divided vertically into a user plane for data information transfer and a control plane for signaling transfer.

The protocol layers may be divided into a first layer (L1), a second layer (L2), and a third layer (L3) based upon the lower three layers of the Open System Interconnection (OSI) reference model widely used for communication systems.

In what follows, each layer of the radio interface protocol will be described.

The physical layer, namely the first layer, provides an information transfer service by using a physical channel. The physical layer is connected to a Medium Access Control (MAC) layer, namely, an upper layer of the physical layer, via a transport channel. Data is transferred between the MAC layer and the physical layer through the transport channel. In addition, data is transferred between different physical layers, namely, between physical layers of a transmitting side and a receiving side, through the physical channel.

The second layer includes the MAC layer, a Radio Link Control (RLC) layer, and a Packet Data Convergence Protocol (PDCP) layer.

The third layer include a Radio Resource Control (hereinafter, simply referred to as RRC). The RRC layer is defined only in the control plane and serves to control the logical channel, the transport channel, and the physical channel in association with configuration, re-configuration, and release of radio bearers (hereinafter, RBs for short). In this case, the RB represents a service provided by the second layer for data transfer between the UE and the E-UTRAN.

The Non-Access Stratum (NAS) layer performs a function such as connection management (session management) and mobility management.

The NAS layer is divided into a NAS entity for Mobility Management (MM) and a NAS entity for Session Management (SM).
1) The NAS entity for MM provides the following typical function.

The following are included as a NAS procedure related to the AMF.
- Registration management and access management procedure: The AMF supports the following function.
- Reliable NAS signal connectivity (integrity protection, encryption) between the UE and the AMF

2) The NAS entity for SM performs session management between the UE and the SMF.

An SM signaling message is processed, namely, generated and processed, in a NAS-SM layer of the UE and the SMF. Content of the SM signaling message is not interpreted by the AMF.
- In the case of SM signaling transmission,
- The NAS entity for MM generates a NAS-MM message to induce a location and method for transferring an SM signaling message through a security header indicating NAS transmission of SM signaling and additional information for NAS-MM to be received.
- In the case of receiving SM signaling, the NAS entity for SM performs integrity checking of the NAS-MM message and interprets additional information to induce a place and a method for deriving an SM signaling message.

Meanwhile, in FIG. 4, an RRC layer, and RLC layer, a MAC layer, and a PHY layer located below the NAS layer are collectively called an access stratum (AS) layer.

A network system (namely 5GC) for the next generation mobile communication (namely 5G) also supports non-3GPP access. Atypical example of the non-3GPP access is WLAN access. The WLAN access may include both trusted and untrusted WLANs.

In the 5G system, the AMF performs not only 3GPP access but also Registration Management (RM) and Connection Management (CM) for non-3GPP access.

Meanwhile, in the future hyperconnected intelligent information society based on the 4th industrial revolution and the 5G mobile communication, ultra reliable low latency communications (URLLC) networking technology for allowing people and things, online and offline, etc. to exchange and process information through organic connection therebetween has been emerging as an essential network infrastructure-based technology.

As a part of the URLLC networking technology, industrial traffic time-sensitive networking (TSN) has been introduced with time-sensitive networking (TSN).

However, there is a problem that access control cannot be processed to meet industrial traffic-related QoS and application service requirements by distinguishing industrial traffic-related signaling.

### SUMMARY OF THE DISCLOSURE

Therefore, the present disclosure is intended to provide a method that may solve the aforementioned problem.

To solve the foregoing problem, an operation method of a terminal is provided. The operation method of the terminal includes: receiving system information including access control-related information about industrial signaling and/or data from a base station; determining an access category based on access identities, upon generation of originating industrial signaling or data; performing a check for unified access control, based on the access category and the access control-related information; determining a radio resource control (RRC) establishment cause or an RRC resumption cause, based on the access category, upon passing the check; and transmitting an RRC message including the determined RRC establishment cause or RRC resumption cause to the base station.

To solve the foregoing problem, a chipset mounted to a terminal is provided. The chipset includes at least one processor; and at least one memory configured to store instructions and operably electrically connectable to the at least one processor, wherein operations performed based on the instructions executed by the at least one processor include: receiving system information including access control-related information about industrial signaling and/or data from a base station; determining an access category based on access identities, upon generation of originating industrial signaling or data; performing a check for unified access control, based on the access category and the access control-related information; determining a radio resource control (RRC) establishment cause or an RRC resumption cause, based on the access category, upon passing the check; and transmitting an RRC message including the determined RRC establishment cause or RRC resumption cause to the base station.

To solve the foregoing problem, an apparatus for a terminal is provided. The apparatus includes a transceiver; at least one processor; and at least one memory configured to store instructions and operably electrically connectable to the at least one processor, wherein operations performed based on the instructions executed by the at least one processor include: receiving system information including access control-related information about industrial signaling and/or data from a base station; determining an access category based on access identities, upon generation of originating industrial signaling or data; performing a check for unified access control, based on the access category and the access control-related information; determining a radio resource control (RRC) establishment cause or an RRC resumption cause, based on the access category, upon passing the check; and transmitting an RRC message including the determined RRC establishment cause or RRC resumption cause to the base station.

By distinguishing signaling related to industrial traffic (for example, time sensitive network (TSN) traffic, time-sensitive communication (TSC) traffic, deterministic networking (DetNet) traffic, ultra-reliable low latency communication (URLLC) traffic, or industrial Internet of things (IIoT) traffic), the access control is efficiently processed according to the industrial traffic (for example, TSN traffic, TSC traffic, DetNet traffic, URLLC traffic, or IIoT traffic) when congestion occurs in a wireless section. With this efficient access control processing, it is possible to improve congestion conditions, and reduce overheads of unnecessary signaling, thereby minimizing the battery and resource wastes of the terminal and the network.

### BRIEF DESCRIPTION OF THE DRAWINGS

FIG. 1 illustrates a structure of the next generation mobile communication network.
FIG. 2 illustrates an expected structure of the next generation mobile communication from the perspective of a node.
FIG. 3 illustrates an architecture for supporting simultaneous accesses to two data networks.
FIG. 4 illustrates a structure of a radio interface protocol between a UE and a gNB.

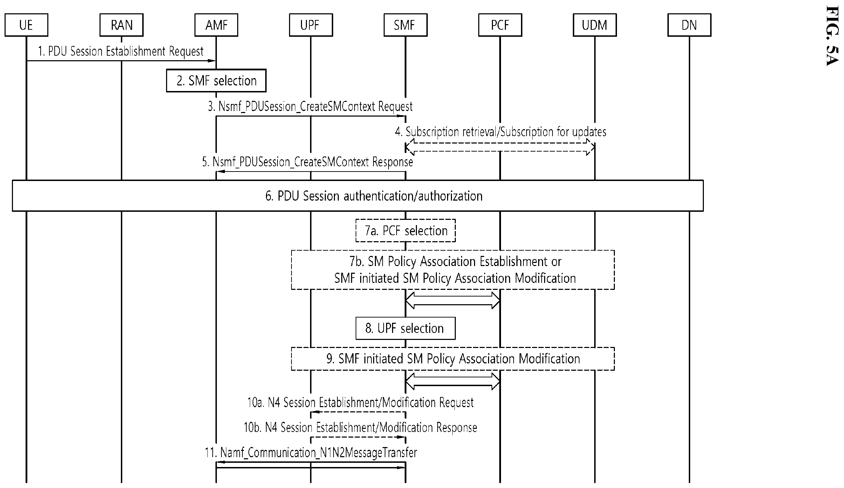

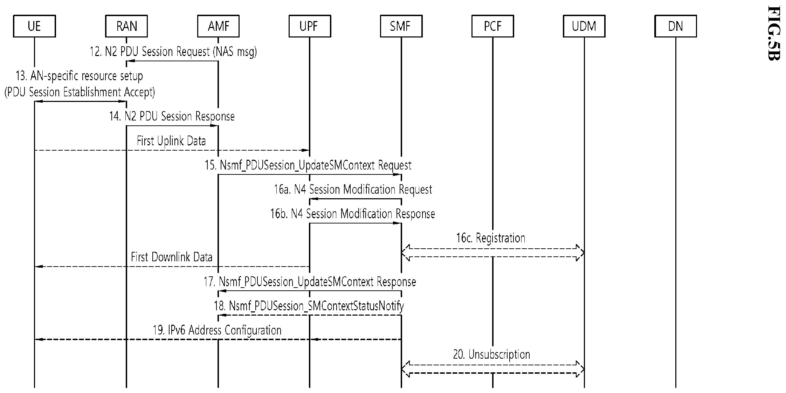

FIGS. 5a and 5b are signal flows of an exemplary PDU session establishment procedure.

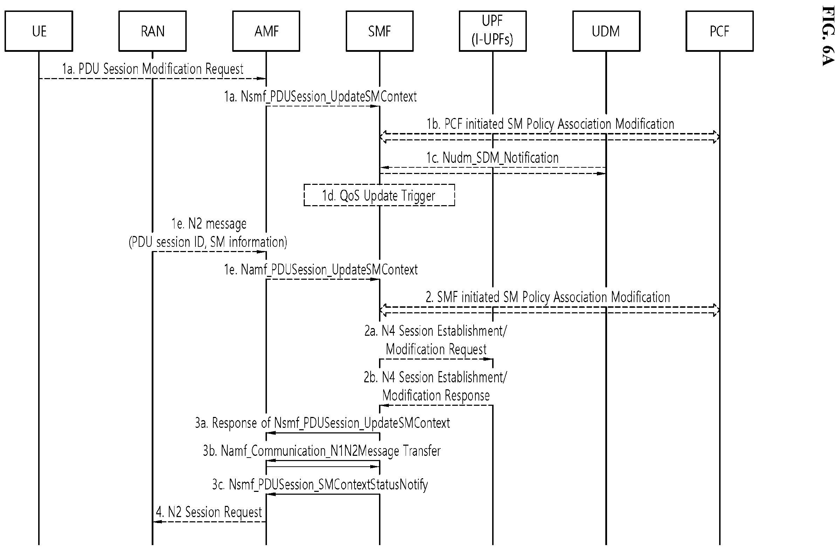

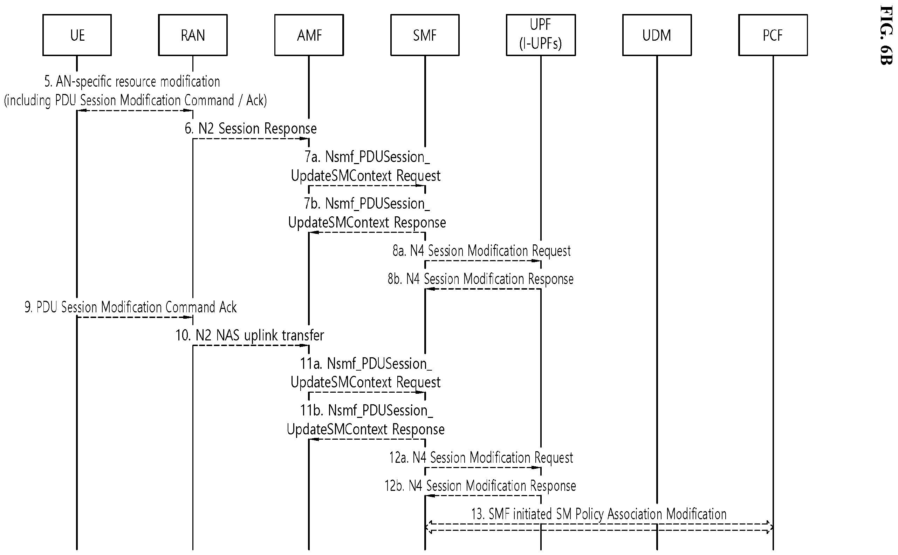

FIG. 6a and FIG. 6b illustrate a procedure for modifying a PDU session.

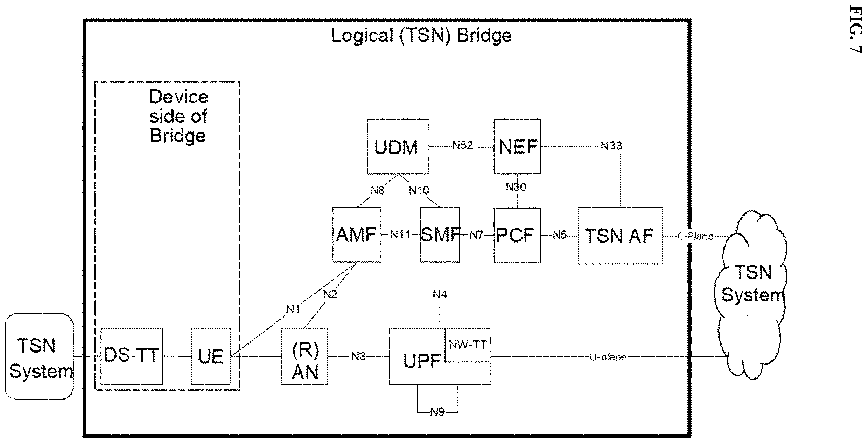

FIG. 7 illustrates a network architecture of interworking with a TSN network.

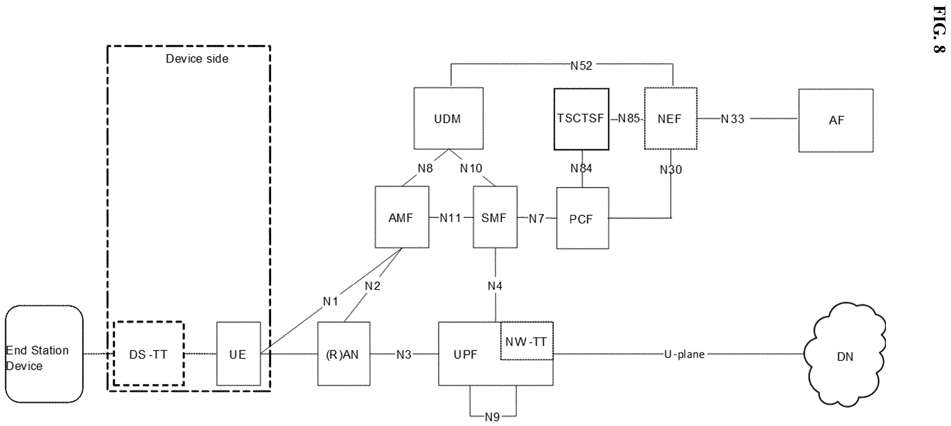

FIG. 8 illustrates an architecture of supporting time-sensitive communications and time synchronization services.

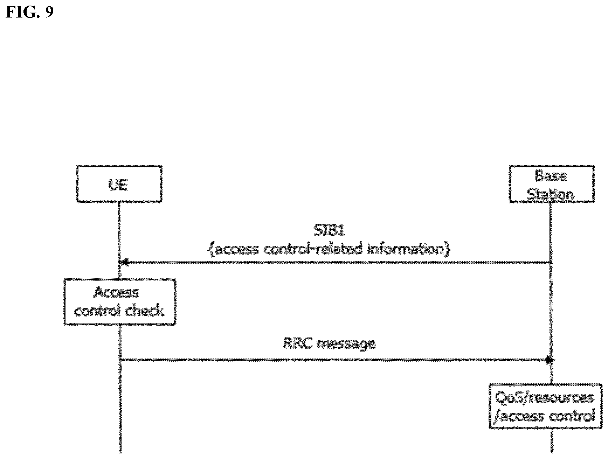

FIG. 9 illustrates the disclosure of this specification.

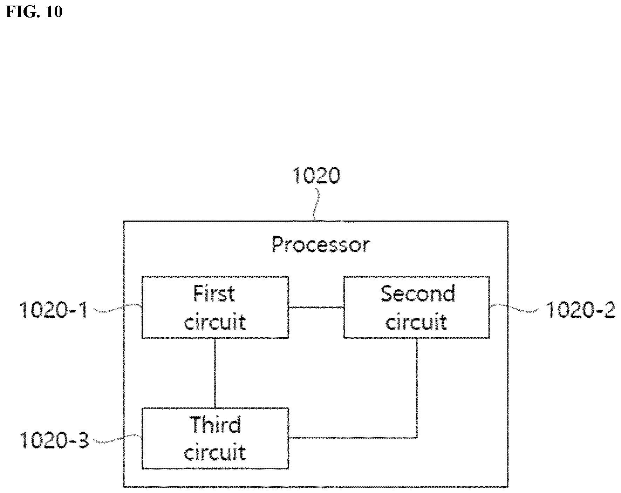

FIG. 10 illustrates a block diagram of a processor in which the present disclosure is implemented.

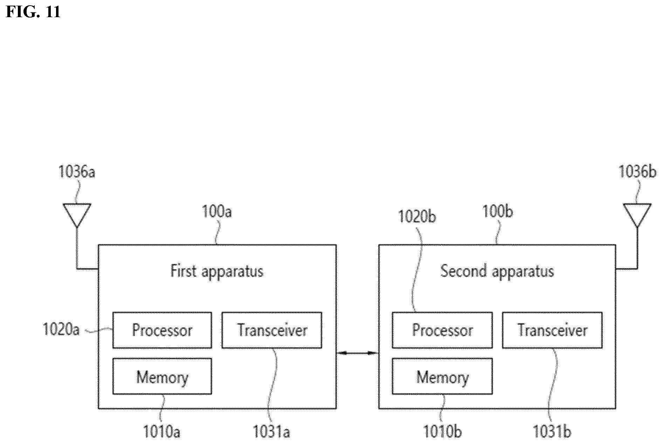

FIG. 11 illustrates a wireless communication system according to one embodiment.

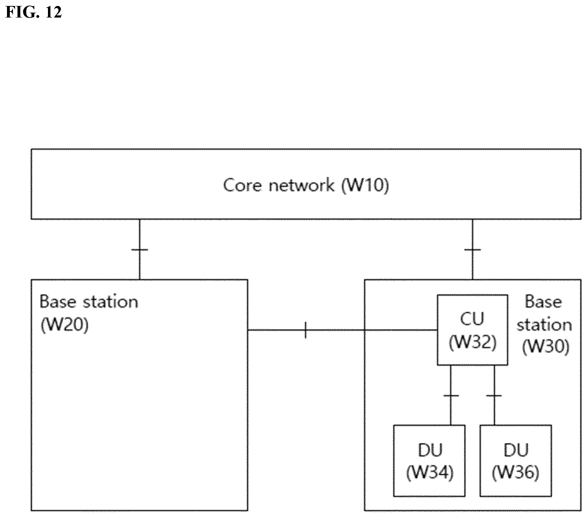

FIG. 12 illustrates a block diagram of a network node according to one embodiment.

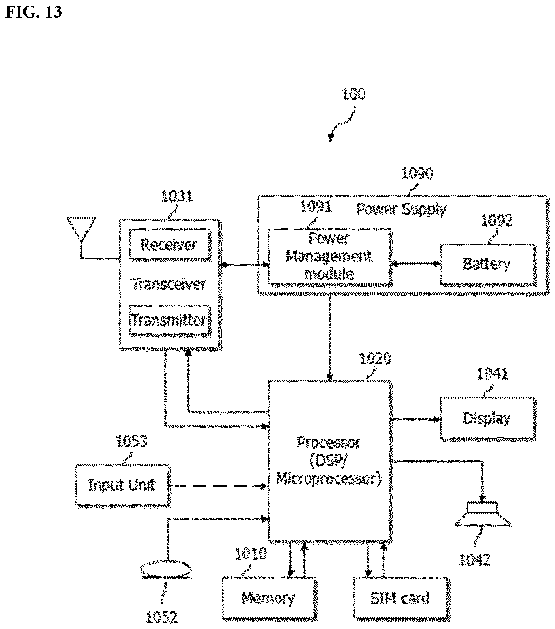

FIG. 13 illustrates a block diagram of a UE according to one embodiment.

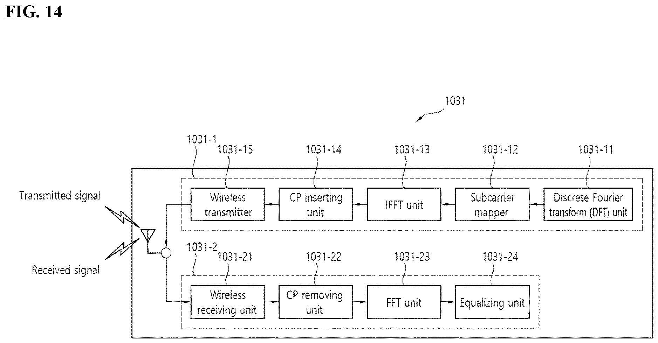

FIG. 14 is a detailed block diagram illustrating a transceiver of the first device shown in FIG. 11 or a transceiver of the UE shown in FIG. 13.

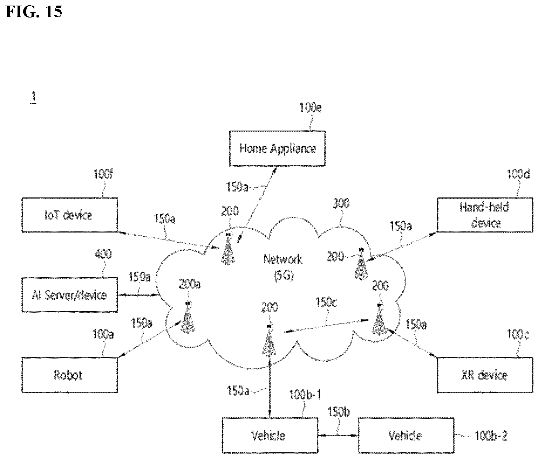

FIG. 15 illustrates a communication system 1 to which the disclosure of this specification applies.

### DESCRIPTION OF EXEMPLARY EMBODIMENTS

The technical terms used herein are used to merely describe specific embodiments and should not be construed as limiting the present disclosure. Further, the technical terms used herein should be, unless defined otherwise, interpreted as having meanings generally understood by those skilled in the art but not too broadly or too narrowly. Further, the technical terms used herein, which are determined not to exactly represent the spirit of the disclosure, should be replaced by or understood by such technical terms as being able to be exactly understood by those skilled in the art. Further, the general terms used herein should be interpreted in the context as defined in the dictionary, but not in an excessively narrowed manner.

The expression of the singular number in the specification includes the meaning of the plural number unless the meaning of the singular number is definitely different from that of the plural number in the context. In the following description, the term 'include' or 'have' may represent the existence of a feature, a number, a step, an operation, a component, a part or the combination thereof described in the specification, and may not exclude the existence or addition of another feature, another number, another step, another operation, another component, another part or the combination thereof.

The terms 'first' and 'second' are used for the purpose of explanation about various components, and the components are not limited to the terms 'first' and 'second'. The terms 'first' and 'second' are only used to distinguish one component from another component. For example, a first component may be named as a second component without deviating from the scope of the present disclosure.

It will be understood that when an element or layer is referred to as being "connected to" or "coupled to" another element or layer, it can be directly connected or coupled to the other element or layer or intervening elements or layers may be present. In contrast, when an element is referred to as being "directly connected to" or "directly coupled to" another element or layer, there are no intervening elements or layers present.

Hereinafter, exemplary embodiments of the present disclosure will be described in greater detail with reference to the accompanying drawings. In describing the present disclosure, for ease of understanding, the same reference numerals are used to denote the same components throughout the drawings, and repetitive description on the same components will be omitted. Detailed description on well-known arts which are determined to make the gist of the disclosure unclear will be omitted. The accompanying drawings are provided to merely make the spirit of the disclosure readily understood, but not should be intended to be limiting of the disclosure. It should be understood that the spirit of the disclosure may be expanded to its modifications, replacements or equivalents in addition to what is shown in the drawings.

The expression "A or B" as used in the present disclosure may mean "only A", "only B" or "both A and B". In other words, "A or B" may be interpreted as "A and/or B" in the present disclosure. For example, in the present disclosure, "A, B or C" may mean "only A", "only B", "only C" or "any combination of A, B and C".

A slash (/) or a comma used in the present disclosure may mean "and/or". For example, "A/B" may mean "A and/or B". Accordingly, "A/B" may mean "only A", "only B", or "both A and B". For example, "A, B, C" may mean "A, B or C".

The phrase "at least one of A and B" as used in the present disclosure may mean "only A", "only B", or "both A and B". Also, the expression "at least one of A or B" or "at least one of A and/or B" may be interpreted to be the same as "at least one of A and B".

Also, the phrase "at least one of A, B and C" as used in the present disclosure may mean "only A", "only B", or "any combination of A, B and C". Also, the phrase "at least one of A, B or C" or "at least one of A, B and/or C" may mean "at least one of A, B and C".

Also, parentheses used in the present disclosure may mean "for example". More specifically, a phrase is written as "control information (PDCCH)", it may mean that "PDCCH" is proposed as one example of "control information". In other words, "control information" of the present disclosure is not limited to "PDCCH", but it may be interpreted that "PDCCH" is proposed as one example of "control information". Also, when a phrase is written as "control information (namely, PDCCH)", it may be interpreted that "PDCCH" is proposed as one example of "control information".

Technical features described individually in one figure of the present disclosure may be implemented separately or simultaneously.

In the drawings, user equipments (UEs) are shown for example. The UE may also be denoted a terminal or mobile equipment (ME). The UE may be a laptop computer, a mobile phone, a PDA, a smartphone, a multimedia device, or other portable device, or may be a stationary device such as a PC or a car mounted device.

### <PDU session establishment procedure>

There are two types of Protocol Data Unit (PDU) session establishment procedures as follows.
- A PDU session establishment procedure initiated by a UE
- A PDU session establishment procedure initiated by a network. To this end, the network may transmit a device trigger message to an application(s) of the UE.

FIGS. 5a and 5b are signal flows of an exemplary PDU session establishment procedure.

The procedures shown in FIGS. 5a and 5b assume that the UE has already registered for the AMF according to the registration procedure described with reference to FIG. 5. Therefore, it is assumed that the AMF has already obtained user subscription data from the UDM.
1) The UE transmits a NAS message to the AMF. The message may include Session Network Slice Selection Assistance Information (S-NSSAI), DNN, PDU session ID, request type, and N1 SM information.

Specifically, the UE includes S-NSSAI from allowed NSSAI of a current access type. If information on the mapped NSSAI has been provided to the UE, the UE may provide both S-NSSAI based on the allowed NSSAI and the corresponding S-NSSAI based on the mapped NSSAI. Here, the mapped NSSAI is S-NSSAI of the allowed NSSAI mapped to S-NSSAI of NSSAI configured for an HPLMN.

More specifically, the UE may extract and store allowed S-NSSAI and the mapped S-NSSAI, which are included in the registration accept message received from the network (namely, AMF) in the registration procedure of FIG. 5. Therefore, the UE may transmit the PDU Session Establishment Request message by including both S-NSSAI based on the allowed NSSAI and the corresponding S-NSSAI based on the mapped NSSAI therein.

To establish a new PDU session, the UE may generate a new PDU session ID.

The UE may start the PDU session establishment procedure initiated by the UE by transmitting a NAS message that includes the PDU Session Establishment Request message in the N1 SM information. The PDU Session Establishment Request message may include a request type, an SSC mode, and a protocol configuration option.

IF PDU session establishment is intended for establishing a new PDU session, the request type represents an "initial request". However, if there is an existing PDU session between 3GPP access and non-3GPP access, the request type may represent an "existing PDU session".

ANAS message transmitted by the UE is encapsulated in an N2 message by the AN. The N2 message may be transmitted to the AMF and include user location information and access technology type information.
- The N1 SM information may include an SM PDU DN request container that includes information on PDU session authentication by an external DN.

2) If the request type is the "initial request" and the PDU session ID has not been used for an existing PDU session of the UE, the AMF may determine that the message corresponds to a request for a new PDU session.

If the NAS message does not include S-NSSAI, the AMF may determine default S-NSSAI on a PDU session requested according to UE subscription. The AMF may associate and store the PDU session ID with the SMF ID.

The AMF may select SMF.

3) The AMF may transmit an Nsmf_PDUSession_CreateSMContext request message or an Nsmf_PDUSession_UpdateSMContext request message to the selected SMF.

The Nsmf_PDUSession_CreateSMContext request message is SUPI, DNN, S-NSSAI(s), PDU Session ID, AMF ID, Request Type, PCF ID, Priority Access, N1 SM container, User location information, Access Type, PEI, GPSI, UE presence in It may include LADN service area, Subscription For PDU Session Status Notification, DNN Selection Mode, and Trace Requirements. The SM container may include a PDU Session Establishment request message.

The Nsmf_PDUSession_UpdateSMContext request message may include SUPI, DNN, S-NSSAI(s), SM Context ID, AMF ID, Request Type, N1 SM container, User location information, Access Type, RAT type, and PEI. The N1 SM container may include a PDU Session Establishment request message.

The AMF ID is used to identify the AMF serving the UE. The N1 SM information may include a PDU session establishment request message received from the UE.

4) SMF transmits a subscriber data request message to UDM. The subscriber data request message may include a subscriber permanent ID and DNN. UDM can transmit subscription data response message to SMF

In step 3 above, if the request type indicates "existing PDU session", the SMF determines that the request is due to handover between 3GPP access and non-3GPP access. The SMF can identify an existing PDU session based on the PDU session ID.

If the SMF has not yet retrieved the SM-related subscription data for the DNN-related UE, the SMF may request subscription data.

The subscription data may include information on an authenticated request type, an authenticated SSC mode, and a basic QoS profile.

The SMF can check whether the UE request complies with the user subscription and local policy. Alternatively, the SMF rejects the UE request through NAS SM signaling (including the related SM rejection cause) delivered by the AMF, and the SMF informs the AMF that the PDU session ID should be considered to be released.

5) The SMF transmits the Nsmf_PDUSession_CreateSMContext Response message or the Nsmf_PDUSession_UpdateSMContext Response message to the AMF.

The Nsmf_PDUSession_CreateSMContext Response message may include Cause, SM Context ID, or N1 SM container. The N1 SM container may include a PDU Session Reject.

In step 3 above, when the SMF receives the Nsmf_PDUSession_CreateSMContext request message, and the SMF can process the PDU Session establishment request message, the SMF SM context is created and the SM context ID is transmitted to the AMF.

6) Secondary authentication/authorization is selectively performed.

7a) When the working PCC is used for the PDU session, the SMF selects the PCF.

7b) The SMF performs an SM policy association establishment procedure in order to establish an SM policy association with the PCF.

8) If the request type of step 3 indicates "initial request", the SMF selects the SSC mode for the PDU session. If step 5 is not performed, the SMF may also select UPF. In case of request type IPv4 or IPv6, SMF can allocate IP address/prefix for PDU session.

9) The SMF performs the SM policy association modification procedure, and provides information on the policy control request trigger and conditions.

10) The request type indicates "initial request", and the SMF starts the N4 session establishment procedure using the selected UPF, otherwise it can start the N4 session modification procedure using the selected UPF.

10a) The SMF transmits an N4 session establishment/modification request message to the UPF. In addition, the SMF may provide a packet detection, enforcement and reporting rule to be installed in the UPF for the PDU session. When the SMF is allocated CN tunnel information, CN tunnel information may be provided to the UPF.

10b) UPF can respond by sending an N4 session establishment/modification response message. When CN tunnel information is allocated by UPF, CN tunnel information may be provided to the SMF.

11) The SMF transmits a Namf_Communication_N1N2MessageTransfer message to the AMF. The Namf_Communication_N1N2MessageTransfer message may include a PDU Session ID, N2 SM information, and N1 SM container.

The N2 SM information includes PDU Session ID, QFI (QoS Flow ID), QoS Profile(s), CN Tunnel Info, S-NSSAI from the Allowed NSSAI, Session-AMBR, PDU Session Type, User Plane Security Enforcement information, UE Integrity. May include Protection Maximum Data Rate.

The N1 SM container may include a PDU session establishment acceptance message.

The PDU session establishment acceptance message may include an authorized QoS rule, SSC mode, S-NSSAI, and an assigned IPv4 address.

12) AMF transmits an N2 PDU session request message to the RAN. The message may include N2 SM information and NAS message. The NAS message may include a PDU session ID and a PDU session establishment acceptance message.

The AMF may transmit a NAS message including a PDU session ID and a PDU session establishment acceptance message. In addition, the AMF includes the received N2 SM information from the SMF in the N2 PDU session request message and transmits it to the RAN.

13) The RAN may exchange specific signaling with the UE related to the information received from the SMF.

The RAN also allocates RAN N3 tunnel information for the PDU session.

The RAN delivers the NAS message provided in step 10 to the UE. The NAS message may include PDU session ID and N1 SM information. The N1 SM information may include a PDU session establishment acceptance message.

The RAN transmits a NAS message to the UE only when necessary RAN resources are set and allocation of RAN tunnel information is successful.

14) The RAN transmits an N2 PDU session response message to the AMF. The message may include PDU session ID, cause, and N2 SM information. The N2 SM information may include a PDU session ID, (AN) tunnel information, and a list of allowed/rejected QoS profiles.
- RAN tunnel information may correspond to an access network address of an N3 tunnel corresponding to a PDU session.

15) The AMF may transmit an Nsmf_PDUSession_UpdateSMContext request message to the SMF. The Nsmf_PDUSession_UpdateSMContext request message may include N2 SM information. Here, the AMF may be a transmission of the N2 SM information received from the RAN to the SMF.

16a) If the N4 session for the PDU session has not already been established, the SMF may start the N4 session establishment procedure together with the UPF. Otherwise, the SMF can start the N4 session modification procedure using UPF. SMF may provide AN tunnel information and CN tunnel information. CN tunnel information may be provided only when the SMF selects CN tunnel information in step 8.

16b) The UPF may transmit an N4 session modification response message to the SMF.

17) The SMF transmits an Nsmf_PDUSession_UpdateSMContext Response message to the AMF.

When this process is over, the AMF can deliver the related event to the SMF.

18) The SMF transmits an Nsmf_PDUSession_SMContextStatusNotify message.

19) SMF transmits information to the UE through UPF. Specifically, in the case of PDU Type IPv6, the SMF may generate an IPv6 Router Advertisement and transmit it to the UE through N4 and UPF.

20) If the PDU session establishment is not successful during the procedure, the SMF informs the AMF.

### <PDU session modification procedure>

**FIGS. 6a** **and** **6b** **illustrate a procedure for modifying a PDU session.**

The PDU Session Modification procedure may be initiated by the UE or by the network.

The PDU Session Modification procedure may be initiated by the UE or by the network.

1a) The UE may initiate the PDU Session Modification procedure by transmitting an NAS message. The NAS message may include an N1 SM container. The N1 SM container may include a PDU Session Modification Request message, a PDU session ID, and information on integrity protection maximum data rate of the UE. The PDU Session Modification Request message may include a PDU session ID, a packet filter, information on requested QoS, 5GSM core network capability, and the number of packet filters. The integrity protection maximum data rate of the UE represents the maximum data rate allowed for the UE to support UP integrity protection. The number of packet filters represents the number of packet filters supported for a QoS rule.

The NAS message is transmitted to an appropriate AMF via the RAN according to the location information of the UE. Then the AMF transmits Nsmf_PDUSession_UpdateSMContext message to the SMF. The message may include a Session Management (SM) context ID and an N1 SM container. The N1 SM container may include a PDU Session Modification Request message.

1b) If the PDU Session Modification procedure is initiated by the PCF among network nodes, the PCF may notify the SMF of a policy change by initiating an SM Policy Association Modification procedure.

1c) If the PDU Session Modification procedure is initiated by the UDM among network nodes, the UDM may update subscription data of the SMF by transmitting Nudm_SDM_Notification message. The SMF may update session management subscription data and transmit an ACK message to the UDM.

1d) If the PDU Session Modification procedure is initiated by the SMF among network nodes, the SMF may trigger a QoS update.

If the PDU Session Modification procedure is triggered according to 1a to 1d cases, the SMF may perform the PDU Session Modification procedure.

1e) If the PDU Session Modification procedure is initiated by the AN among network nodes and AN resources to which a QoS flow is mapped are released, the AN may notify the SMF of the resource release. The AN may transmit an N2 message to the AMF. The N2 message may include a PDU session ID and N2 SM information. The N2 SM information may include QFI, user location information, and an indication indicating release of a QoS flow. The AMF may transmit Nsmf_PDUSession_UpdateSMContext message. The message may include an SM context ID and N2 SM information.

2) The SMF may transmit a report on a subscription event by performing an SM Policy Association Modification procedure. If the PDU Session Modification procedure is triggered by 1b to 1d cases, this step may be skipped. If dynamic PCC is not deployed over the network, the SMF may apply an internal policy to determine the change of the QoS profile.

The steps 3 to 7 described below may not be performed when the PDU Session Modification procedure requires only the operation of the UPF.

3a) If the UE or the AN initiates the PDU Session Modification procedure, the SMF may respond to the AMF by transmitting Nsmf_PDUSession_UpdateSMContext message. The message may include N2 SM information and an N2 SM container. The N2 SM information may include a PDU session ID, QFI, a QoS profile, and a session-AMBR. The N1 SM container may include a PDU session modification command. The PDU session modification command may include a PDU session ID, a QoS rule, a QoS rule operation, QoS parameters at QoS flow level, and a session-AMBR.

The N2 SM information may include information that the AM has to transmit to the AN. The N2 SM information may include QFI and a QoS profile to notify the AN that one or more QoS flows are added or modified. If PDU session modification is requested by a UE for which user plane resources are not configured, the N2 SM information to be transmitted to the AN may include information for establishment of user plane resources.

The N1 SM container may include a PDU Session Modification command to be transmitted to the UE by the AMF. The PDU Session Modification command may include a QoS rule and QoS parameters at QoS flow level.

3b) If the PDU Session Modification procedure is initiated by the SMF, the SMF may transmit Namf_Communication_N1N2MessageTransfer message. The message may include N2 SM information and an N1 SM container. The N2 SM information may include a PDU session ID, QFI, a QoS profile, and a session-AMBR. The N1 SM container may include a PDU session modification command. The PDU session modification command may include a PDU session ID, a QoS rule, and QoS parameters at QoS flow level.

If the UE is in the CM-IDLE state and ATC is in the active state, the AMF may skip steps 3 to 7 described below after updating and storing UE context based on the Namf_Communication_N1N2MessageTransfer message. If the UE enters a reachable state, namely, CM-CONNECTED state, the AMF may transmit an N1 message to synchronize the UE with the UE context.

4) The AMF may transmit an N2 PDU Session Request message to the AN. The N2 PDU Session Request message may include the N2 SM information and the NAS message received from the SMF. The NAS message may include a PDU session ID and an N1 SM container. The N1 SM container may include a PDU session modification command.

5) The AN performs AN signaling exchange with a UE associated with the information received from the SMF. For example, in the case of NG-RAN, to modify required AN resources associated with the PDU session, an RRC Connection Reconfiguration procedure may be performed in conjunction with the UE.

6) The AN transmits an N2 PDU session ACK message in response to the received N2 PDU session request. The N2 PDU session ACK message may include N2 SM information and user location information. The N2 SM information may include a list of accepted / rejected QFI, AN tunnel information, and an PDU session ID.

7) The AMF transmits the N2 SM information and the user location information received from the AN through Nsmf_PDUSession_UpdateSMContext message. Then the SMF transmits Nsmf_PDUSession_UpdateSMContext message to the AMF.

8) The SMF transmits an N4 Session Modification Request message to the UPF to update the N4 session of the UPF included in the PDU Session Modification command.

If a new QoS flow is generated, the SMF updates an UL packet detection rule of the new QoS flow together with the UPF.

9) The UE transmits an NAS message in response to the reception of the PDU Session Modification command. The NAS message may include a PDU session ID and an N1 SM container. The N1 SM container may include a PDU Session Modification command ACK.

10) The AN transmits the NAS message to the AMF.

11) The AMF may transmit the N1 SM container and the user location information received from the AN to the SMF through Nsmf_PDUSession_UpdateSMContext message. The N1 SM container may include a PDU Session Modification command ACK. The SMF may transmit Nsmf_PDUSession_UpdateSMContext Response message to the AMF.

12) The SMF transmits an N4 Session Modification Request message to the UPF to update the N4 session of the UPF included in the PDU Session Modification command. The message may include an N4 session ID.

13) When the SMF interacts with the PCF during the step 1b or 2, the SMF may notify the PCF of whether a PCC decision may be performed or not via the SM Policy Association Modification procedure.

The SMF may notify an entity which has requested the user location information related to PDU session modification.

### < Time-Sensitive Networking (TSN)>

On the other hand, time-sensitive networking (TSN) will be described.

In the future hyperconnected intelligent information society based on the 4th industrial revolution and the 5G mobile communication, ultra reliable low latency communications (URLLC) networking technology for allowing people and things, online and offline, etc. to exchange and process information through organic connection therebetween has been emerging as an essential network infrastructure-based technology. Accordingly, the 3GPP has also been conducting research on automation-centered industrial Internet of things (IIoT), which can maximize industrial productivity and profitability through changes in the communication infrastructure, while actively accepting the challenging requirements of vertical industrial domains. In particular, mission-oriented industries such as smart factories, smart grids, and intelligent transportation systems require ultra-reliable and low-latency communication performance at the level of wired infrastructure, and thus new technologies for support this requirement are being reflected in the standards.

To implement the industrial Internet of things (IIoT), which connects various facilities and systems in such industrial sites through a network, IEEE TSN technology has emerged. The IEEE TSN technology refers to a kind of package technology, in which several existing IEEE standards are combined, and is regarded as the next-generation industrial network standards capable of covering most network applications extended from the standard Ethernet. In the 3GPP, 5G-TSN technology has been carrying forward standardization in earnest since Rel-16 to expand the vertical applications of 5G technology. Basically, the 5G-TSN technology is to integrate IEEE TSN technology into a 5G system (5GS), and refers to time-sensitive communications (TSC) that define and support various IIoT service requirements. The TSC basically undergoes time synchronization between the 5GS and the TSN. Then, TSC QoS Flow based on TSC assistance information (TSCAI) is supported.

**FIG. 7** **illustrates a network architecture of interworking with a TSN network.**

Referring to FIG. 7, the 5GS may interwork with an external network through a TSN bridge. The logical TSN bridge may have TSN translator functionality to enable interaction between the 5GS and the TSN system for both the user plane and the control plane. The 5GS TSN translator functionality may include a device-side TSN translator (DS-TT) and a network-side TSN translator (NW-TT). The TSN AF is a part of the 5GC, and may provide control plane translator functionality to integrate the 5GS into the TSN. 5GS characteristic procedures, wireless communication links, etc. in the 5GC and RAN may not be shown in the TSN network. The 5GS provides TSN ingress and egress ports through the DS-TT and the NW-TT.

The DS-TT may support a connection search and report of the link layer to find the Ethernet devices connected to the DS-TT. Likewise, the NW-TT may support a connection search and report of the link layer to find the Ethernet devices connected to the NW-TT. When the DS-TT does not support the connection search and report of the link layer, the NW-TT may perform the connection search and report of the link layer on behalf of the DS-TT, thereby searching for Ethernet devices connected to the DS-TT.

**FIG. 8** **illustrates an architecture of supporting time-sensitive communications and time synchronization services.**

Referring to FIG. 8, the DS-TT, the NW-TT, and time sensitive communication and time synchronization function (TSCTSF) for supporting the time synchronization services for the Ethernet or IP type session are shown. The NEF provides the 5GS capability information to support the time synchronization service. The TSCTSF controls the DS-TT and the NW-TT.

The UPF/NW-TT transmits a (g)PTP messages.

When the UPF supports one or more NW-TT, there may be a one-to-one association between the NW-TT and network instances or there may be a one-to-one association between the NW-TT and the network instances with the DNN/S-NSSAI within the UPF. When several network instances are present within the UPF, the network instances may be considered to be separated logically.

### < Deterministic Networking (DetNet)>

DetNet technology being developed by the IETF DetNet WG is a technology (Layer 3 technology) in which the application range of the Ethernet TSN technology (Layer 2 technology) is extended and integrated into IP- and MPLS-based networks. Ultimately, the DetNet technology refers to a technology that supports the extension of the Ethernet TSN technology (Layer 2 technology) to the IP technology (Layer 3 technology). In Rel-18 of the 3GPP, the TSC framework extension technologies are reflected in the standards to support the IETF DetNet technology in the 5GS.

### < Unified access control>

How to control the access to the network

A lot of user equipment (UE) may access a communication system, and various services may be present in the UE. When numerous UEs and numerous services make data communication requests but the network cannot accept the data communication requests from all the UEs and services, the network needs to control access requests from the UEs to increase system stability. Otherwise, problems may arise in that communication access requests such as emergency calls are not processed properly.

This access control method is generally called access control, and the "unified access control" technique is used in 5G.

Below, the unified access control will be described in detail.

Depending on operator policy, deployment scenario, subscriber profile and applicable services, different criteria are used to determine which access attempts need to be permitted or barred when congestion occurs in the 5G system. The different criteria for the access control are associated with access identity and access category. The 5G system provides single unified access control where the operator controls the access based on these two aspects.

In the unified access control, each access attempt is classified with one or more access identities and one access category. The UE tests whether an actual access attempt can be performed based on the access control information applicable to the access identity and the access category associated/matching with the access attempt.

The unified access control supports the extensibility to allow for additionally standardized access identities and access categories, and supports the flexibility to allow for operator-defined access identities and access categories based on the operator's own criteria (for example, network slicing, applications, and application servers for the access identities, subscription information, and access categories).

Further, the use of Legacy Access Classes 11 to15 is expended when the success of the access attempt is potentially allowed. Otherwise, the access attempt may be barred according to user types.

According to the operator policy, the 5G system needs to prevent the UE from accessing the network using barring parameters based on the access identity and access category. The access identity is configured in the UE as listed in the following Table 1. The access category is defined based on combinations between the conditions for the UE and the types of access attempts, which are listed in the following Table 2. One or more access identities and one access category are selected and tested for the access attempts.

The 5G network may transmit barring control information (i.e., list of barring parameters associated with the access identities and the access category) within one or more areas in the RAN.

The UE may determine whether a new specific access attempt can be allowed based on the barring parameters received from the barring control information and the UE configurations.

In the case of multiple core networks sharing the same RAN, the RAN may apply the access control individually to different core networks.

The unified access control framework may be applied to both the UE accessing the 5G core network (CN) using E-UTRA and the UE accessing the 5G CN using new radio (NR).

The unified access control framework may be applied to the UE in an RRC idle, RRC inactive, or RRC connected state when starting a new access attempt (i.e., a new session request).

The 5G system supports the operator-defined access category that can be defined by the operator as mutually exclusive.

The unified access control framework may be applied to a roamer introduced into the PLMN. The serving PLMN may provide the UE with definition of the operator-defined access category.

Table 3 illustrates the access identities.

**[Table 3]**

| Access identity No. | UE configuration |
|---|---|
| 0 | UE is not configured for any parameter from this table. |
| 1 | UE is configured for the multimedia priority service (MPS). |
| 2 | US is configured for mission critical service (MCS). |
| 3 | Application to disaster conditions. |
| 4 to 10 | Reservation for secondary use. |
| 11 | Access Class 11 is configured within the UE. |
| 12 | Access Class 12 is configured within the UE. |
| 13 | Access Class 13 is configured within the UE. |
| 14 | Access Class 14 is configured within the UE. |
| 15 | Access Class 15 is configured within the UE. |

The access identities may be barred at any time.

**[Table 4]**

| Access Category No. | Conditions related to UE | Type of access attempt |
|---|---|---|
| 0 | All | Mobile Originating (MO) signaling resulting from paging |
| 1 (NOTE 1) | UE is configured for delay tolerant service, and subject to the access control for the access category 1 (subject to the access control determined based on the relationship between the UE's HPLMN and selected PLMN). | All except for Emergency |
| 2 | All | Emergency |
| 3 | All except for the conditions of the access category 1 | NAS level MO signaling due to consequences other than paging |
| 4 | All except for the conditions of the access category 1 | multimedia telephony (MMTEL) voice (NOTE 3) |
| 5 | All except for the conditions of the access category 1 | MMTEL video |
| 6 | All except for the conditions of the access category 1 | SMS |
| 7 | All except for the conditions of the access category 1 | MO data that does not belong to other accessory categories (NOTE 4) |
| 8 | All except for the conditions of the access category 1 | NAS level MO signaling due to consequences other than paging |
| 9 to 31 | | Reserved standardized Access Categories |
| 32 to 63 (NOTE 2) | All | Configuration allowed based on operator classification |

The 5G network may broadcast the barring control information in one or more areas of the RAN. The barring control information may for example be a list of barring parameters related to the access ID and the access category. The UE may determine whether a particular new access attempt is allowed based on the barring parameters (which the UE receives from the broadcasted barring control information) and the UE configurations. In the case of multiple core networks sharing the same RAN, the RAN may apply the access control individually for different core networks.

The unified access control framework may be applied to both the UEs accessing the 5G core network (CN) using E-UTRA and the UEs accessing the 5G CN using NR.

The unified access control framework may be applied to the UEs in the radio resource control (RRC) idle state, the RRC inactive state and the RRC connected states when the UE starts a new access attempt (e.g., a new session request).

For reference, the "new session request" in the RRC connected state may refer to an event. For example, the event may include new MMTEL voice sessions, MMTEL video sessions, transmission of SMS (SMS over IP, or SMS over NAS), new PDU session establishment, the existing PDU session modification, and a service request to re-establish a user plane for the existing PDU sessions.

The 5G system may support a means for operators to define operator-defined access categories as mutually exclusive. For example, the criteria for provider-defined access categories may include network slicing, applications and application servers.

The unified access control framework may be applied to inbound roamers to the PLMN.

The serving PLMN may provide the definitions of the operator-defined access categories to the UE.

When the UE needs to access the 5G system (5GS), the UE may first perform an access control check to determine whether the access is allowed. The access control check may be performed for the access attempt defined by the list of events as follows:
a) when the UE is in 5GS mobility management (5GMM)-IDLE mode through the 3GPP access, and an event occurs requiring transition to the 5GMM-CONNECTED mode; and
b) when the UE is in the 5GMM-CONNECTED mode through the 3GPP access or in the 5GMM-CONNECTED mode with the RRC inactive indication, and one of the following events occurs:
b-1) when the NAS layer (e.g., 5GMM) of the UE receives MO-MMTEL-voice-call-started information/indication, MO-MMTEL-video-call-started information/indication or MO-SMSoIP-attempt-started information/indication from the upper layer (e.g., application layer);
b-2) when the NAS layer (e.g., 5GMM) of the UE receives a request for transmitting a mobile originated SMS over NAS from the upper layer (e.g., application layer), and the request does not trigger a service request for the UE's transition from the 5GMM-IDLE mode to the 5GMM-CONNECTED mode;
b-3) when the NAS layer (e.g., 5GMM) of the UE receives a request for transmitting a UL NAS TRANASPORT message for the purpose of PDU session establishment from the upper layer (e.g., application layer), and the request does not trigger a service request for the UE's transition from the 5GMM-IDLE mode to the 5GMM-CONNECTED mode;
b-4) when the NAS layer (e.g., 5GMM) of the UE receives a request for transmitting a UL NAS TRANASPORT message for the purpose of PDU session modification from the upper layer (e.g., application layer), and the request does not trigger a service request for the UE's transition from the 5GMM-IDLE mode to the 5GMM-CONNECTED mode
b-5) when the NAS layer (e.g., 5GMM) of the UE receives a request for re-establishing the user-plane resources for the existing PDU session; and
b-6) when the NAS layer (e.g. 5GMM) of the UE is notified that an uplink user data packet will be transmitted for a PDU session with the suspended user-plane resources.

When the NAS layer of the UE detects one of the above-described events, the NAS layer of the UE may perform an operation of mapping the kind of request to one or more access IDs and the access category. Additionally, the lower layer of the UE (e.g., RRC layer) may perform an access barring check for the request based on the determined access IDs and the access category. For reference, the NAS layer of the UE may recognize the above-mentioned events through the information/indications provided from the upper layer and/or when determining the need to start a normal NAS operation.

To determine the access IDs and the access category of the request, the NAS layer of the terminal may check a reason for the access to a set of access IDs and a set of access category, the type of requested services, and a UE profile including the UE configuration. Here, the examples of the set of access IDs and the set of access categories are as follows:
- the set of standardized access IDs;
- the set of standardized access categories; and
- if possible, the set of operator-defined access categories.

When a terminal (e.g., UE) needs to initiate an access attempt for one of the events such as the foregoing examples a) to b-6), the terminal may determine one or more access IDs associated with the access attempts from the set of standardized access IDs, and determine one access category associated with the access attempts from the set of standardized access categories and the set of operator-defined access categories.

For example, the set of access IDs applicable to the requests related to the access attempts may be determined by the terminal (e.g., UE) in the following manner:
i) in the example of Table 3, when a new PLMN is selected for each of the access IDs 1, 2, 11, 12, 13, 14 and 15, the UE checks whether the access ID is applicable in the selected PLMN. Alternatively, the UE may check whether the access ID is applicable to the RPLMN or equivalent PLMN; and
ii) when there is no applicable access ID among the access IDs 1, 2, 11, 12, 13, 14 and 15, the access ID 0 is applicable.

To determine the applicable access categories for the access attempts, the NAS layer of the terminal may check rules such as examples in the following Table 5, and use matching access categories for the barring check.

Table 5 shows an example of the rules used when the NAS layer of the terminal determines the applicable access categories for the access attempts.

**[Table 5]**

| Rules # | Types of access attempts | Requirements to be satisfied | Access category |
|---|---|---|---|
| 1 | Response to paging or NOTIFICATION over non-3GPP access; 5GMM connection management procedure initiated for the purpose of transporting an LPP or location event report message without an ongoing 5GC-MO-LR procedure; Access attempt to handover of ongoing MMTEL voice call, MMTEL video call or SMSoIP from non-3GPP access | Access attempt is for MT access, or handover of ongoing MMTEL voice call, MMTEL video call or SMSoIP from non-3GPP access | 0 (= MT_acc) |
| 2 | Emergency | UE is attempting access for an emergency session | 2 (= emergency) |
| 3 | Access attempt for operator-defined access category | UE stores operator-defined access category definitions valid in the current PLMN, and access attempt is matching criteria of an operator-defined access category definition | 32-63 (= based on operator classification ) |
| 3.1 | Access attempt for MO exception data | UE is in NB-N1 mode and allowed to use exception data reporting, and access attempt is for MO data or for MO signaling initiated upon receiving a request from upper layers to transmit user data related to an exceptional event. | 10 (= MO exception data) |
| 4 | Access attempt for delay tolerant service | (a) UE is configured for NAS signaling low priority or UE supporting S1 mode is configured for EAB where "EAB override" does not apply, and | 1 (= delay tolerant) |
| | | (b): the UE received one of the categories a, b or c as part of the parameters for unified access control in the broadcast system information, and the UE is a member of the broadcasted category in the selected PLMN or RPLMN/equivalent PLMN | |
| 4.1 | MO IMS registration related signaling | Access attempt is for MO IMS registration related signaling (e.g. IMS initial registration, re-registration, subscription refresh) or for NAS signaling connection recovery during ongoing procedure for MO IMS registration related signaling | 9 (= MO IMS registration related signaling) |
| 5 | MO MMTel voice call | Access attempt is for MO MMTel voice call or for NAS signaling connection recovery during ongoing MO MMTel voice call | 4 (= MO MMTel voice) |
| 6 | MO MMTel video call | Access attempt is for MO MMTel video call or for NAS signaling connection recovery during ongoing MO MMTel video call | 5 (= MO MMTel video) |
| 7 | MO SMS over NAS or MO SMSoIP | Access attempt is for MO SMS over NAS or MO SMS over SMSoIP transfer or for NAS signaling connection recovery during ongoing MO SMS or SMSoIP transfer | 6 (= MO SMS and SMSoIP) |
| 8 | UE NAS initiated 5GMM specific procedures | Access attempt is for MO signaling | 3 (= MO_sig) |
| 8.1 | Mobile originated location request | Access attempt is for mobile originated location request | 3 (= MO_sig) |
| 8.2 | Mobile originated signaling transaction towards the PCF | Access attempt is for mobile originated signaling transaction towards the PCF | 3 (= MO_sig) |
| 9 | UE NAS initiated 5GMM connection management procedure or 5GMM NAS transport procedure | Access attempt is for MO data | 7 (= MO_data) |
| 10 | An uplink user data packet is to be sent for a PDU session with suspended user-plane resources | No further requirement is to be met | 7 (= MO_data) |

When the access attempt matches one or more rules, the access category with the lowest rule number among the one or more rules may be selected. When the access attempt matches one or more definitions of the operator-defined access category, the UE may select the definition of the operator-defined access category with the lowest precedence value. Here, a case where one access attempt matches one or more rules may include a case where multiple events simultaneously trigger one access attempt.

### 1. Access control check in the 5GMM-IDLE mode and in the 5GMM-IDLE mode by suspension indication

When the terminal receives a request from the upper layer for the access attempt in the 5GMM-IDLE mode and in the 5GMM-IDLE mode with the suspend indication, the NAS layer of the terminal classifies the access attempt based on the access identities and the access category as follows.
a) When the UE does not operate in an SNPN access mode; or
b) When the UE operates in the SNPN access mode,
the NAS layer of the terminal transmits the applicable access identities and access category to the lower layer for the purpose of access control check. Based on the request to the lower layer, the NAS layer also provides the RRC establishment cause to the lower layer.

In other words, when the NAS layer of the UE in the 5GMM-IDLE mode receives the request for the access attempt from the upper layer of the UE, the NAS layer of the UE may classify the access attempts based on the access IDs and the access category according to the examples in the foregoing Tables 4 and 5.

For the access control checking, the NAS layer of the UE may transmit the request containing the applicable access ID and the applicable access category to the lower layer (e.g., RRC layer). The lower layer may perform the access barring check. The NAS layer of the terminal may provide the RRC establishment cause in the request to the lower layer. According to the implementation options, the NAS layer of the UE may provide the RRC establishment cause to the lower layer after receiving notification from the lower layer that the access attempt is permitted.

When the lower layer notifies the NAS layer that the access attempt is permitted, the NAS layer may initiate procedures for transmitting an initial NAS message about the access attempt.

When the lower layer notifies the NAS layer that the access attempt is barred, the NAS layer may not initiate the procedures for transmitting the initial NAS message for the access attempt. In addition, when the event that triggered the access attempt is the MO-MMTEL-voice-call-started information/indication, MO-MMTEL-video-call-started information/indication, or MO-SMSoIP-attempt-started information/indication, the NAS layer may notify the upper layer (e.g., application layer) that the access attempt was barred. In this case, when the NAS layer receives the information/indication from the lower layer (e.g. RRC layer) that the barring for the access category associated with the access attempt has been relieved, the NAS layer may notify the upper layer that the barring for the access category has been relieved. In addition, the NAS layer may initiate the procedures for transmitting the initial NAS message if still necessary. For reference, a barring timer for each access category may be run by the lower layer. When the barring timer is stopped, the lower layer may notify the NAS layer of the information/indication that the access barring has been relieved, for each access category.

### 2. Access control check in the 5GMM-CONNECTED mode and in the 5GMM-CONNECTED mode by RRC inactive indication

When the upper layer of the UE detects one of the foregoing events of b-1) to b-6) while the UE is in the 5GMM-CONNECTED mode or in the 5GMM-CONNECTED mode with the RRC inactive indication, the NAS layer of the UE may receive the request for the access attempt from the upper layer of the UE. Then, the NAS layer of the UE may classify the access attempts based on the access IDs and access category according to the foregoing examples in Tables 4 and 5. For the access control checking, the NAS layer of the UE may transmit a request containing the applicable access IDs and the applicable access category to the lower layer (e.g., RRC layer).

The lower layer may perform the access barring check. The NAS layer of the UE may provide the RRC establishment cause in the request to the lower layer. According to the implementation options, the NAS layer of the UE may provide the RRC establishment cause to the lower layer after receiving notification from the lower layer that the access attempt is permitted.

When the UE contains pending uplink user data for one or more PDU sessions while building a REGISTRATION REQUEST message or a SERVICE REQUEST message for the access attempt, the UE may indicate each PDU session within uplink data state information element (IE), regardless of the access category where the access barring check is performed. Although the barring timer is running for some of the corresponding access categories, the UE may indicate the pending user data for each PDU session.

When the lower layer notifies the NAS layer that the access attempt is permitted, the NAS layer may perform the following operations based on the event that triggered the access attempt:
a) when the event that triggered the access attempt is the MO-MMTEL-voice-call-started information/indication, the MO-MMTEL-video-call-started information/indication or the MO-SMSoIP-attempt-started information/indication, the NAS layer may notify the upper layer (e.g., application layer) that the access attempt is permitted;
b) when the event that triggered the access attempt is a request from the upper layer to transmit the mobile originated SMS over the NAS, the NAS layer (e.g., 5GMM layer) may initiate the NAS transport procedures to transport the SMS within the UL NAS TRANSPORT message;
c) when the event that triggered the access attempt is a request from the upper layer to establish a new PDU session, the NAS layer (e.g. 5GMM layer) may initiate the NAS transport procedures to transport a PDU session establishment request message;
d) when the event that triggered the access attempt is a request from the upper layer to modify the existing PDU session, the NAS layer (e.g., 5GMM layer) may initiate the NAS transport procedures to transport a PDU session modification request message;
e) when the event that triggered the access attempt is a request for re-establishing the user-plane resources for the existing PDU session, the NAS layer (e.g., 5GMM layer) may initiate the service request procedures; and
f) when the event that triggered the access attempt is an uplink user data packet to be transmitted for a PDU session with delayed user-plane resources, the NAS layer (e.g. 5GMM layer) may consider that the uplink user data packet will be transmitted.

When the lower layer notifies the NAS layer that the access attempt is barred, the NAS layer may perform the following operations based on the event that triggered the access attempt:
a) when the event that triggered the access attempt is the MO-MMTEL-voice-call-started information/indication, the MO-MMTEL-video-call-started information/indication or the MO-SMSoIP-attempt-started information/indication, the NAS layer may notify the upper layer that the access attempt is barred. The upper layer may prohibit the initiation of the MMTEL voice session and the transmission of the MMTEL video session or SMS over IP. In this case, when the NAS layer receives the information/indication from the lower layer (e.g. RRC layer) that the barring for the access category associated with the access attempt has been relieved, the NAS layer may notify the upper layer that the barring for the access category has been relieved;
b) when the event that triggered the access attempt is a request from the upper layer to transmit the mobile originated SMS over the NAS, the NAS layer (e.g., 5GMM layer) may not initiate the NAS transport procedures to transport the SMS through the UL NAS TRANSPORT message. When the NAS layer receives information/indication from the lower layer (e.g. RRC layer) that the barring for the access category associated with the access attempt has been relieved, the NAS layer may initiate the NAS transport procedure if still necessary;
c) when the event that triggered the access attempt is a request from the upper layer to establish a new PDU session, the NAS layer (e.g. 5GMM layer) may not initiate the NAS transport procedure to transport a PDU session establishment request message. When the NAS layer receives information/indication from the lower layer (e.g. RRC layer) that the barring for the access category associated with the access attempt has been relieved, the NAS layer may initiate the NAS transport procedure if still necessary;
d) when the event that triggered the access attempt is a request from the upper layer to modify the existing PDU session, the NAS layer (e.g., 5GMM layer) may not initiate the NAS transport procedure to transport a PDU session modification request message. When the NAS layer receives information/indication from the lower layer (e.g. RRC layer) that the barring for the access category associated with the access attempt has been relieved, the NAS layer may initiate the NAS transfer procedure if still necessary;
e) when the event that triggered the access attempt is a request to re-establish the user-plane resources for the existing PDU session, the NAS layer (e.g., 5GMM layer) may not initiate the service request procedure. When the NAS layer receives information/indication from the lower layer (e.g. RRC layer) that the barring for the access category associated with the access attempt has been relieved, the NAS layer may initiate the service request procedure if still necessary; and
f) when the event that triggered the access attempt is an uplink user data packet to be transmitted for a PDU session with delayed user-plane resources, the NAS layer (e.g. 5GMM layer) may not consider that the uplink user data packet will be transmitted. When the NAS layer receives information/indication from the lower layer (e.g., RRC layer) that the barring for the access category associated with the access attempt has been relieved, the NAS layer may consider that the barring for the access category has been relieved.

### 3. Mapping between the access categories/access identities and the RRC establishment cause

When the 5GMM requests the establishment of NAS signaling connection, the RRC establishment cause used by the UE may be selected by one or more access identities and the access categories. When the access attempt matches one or more rules, the RRC establishment cause with the lowest rule number may be used. When the determined access category is an operator-defined access category, the RRC establishment cause used by the terminal may be selected based on one or more access identities and the standardized access category.

Table 6 shows the mapping between the access identities/access categories and the RRC establishment cause when N1 NAS signaling connection is established through NR connected to the 5GCN.

**[Table 6]**

| Rule # | Access identity | Access category | RRC establishment cause to be set |
|---|---|---|---|
| 1 | 1 | Any category | mps-Priority Access |
| 2 | 2 | Any category | mcs-Priority Access |
| 3 | 11, 15 | Any category | highPriority Access |
| 4 | 12,13,14, | Any category | highPriority Access |
| 5 | 0 | 0 (= MT_acc) | mt-Access |
| | | 1 (= delay tolerant) | Not applicable (NOTE 1) |
| | | 2 (= emergency) | emergency |
| | | 3 (= MO_sig) | mo-Signaling |
| | | 4 (= MO MMTel voice) | mo-VoiceCall |
| | | 5 (= MO MMTel video) | mo-VideoCall |
| | | 6 (= MO SMS and SMSoIP) | mo-SMS |
| | | 7 (= MO_data) | mo-Data |
| | | 9 (= MO IMS registration related signaling) | mo-Data |

Table 7 shows the mapping between the access identities/access categories and the RRC establishment cause when N1 NAS signaling connection is established through E-UTRA connected to 5GCN.

**[Table 7]**

| Rule # | Access identity | Access category | RRC establishment cause to be set |
|---|---|---|---|
| 1 | 1 | Any category | highPriority Access |
| 2 | 2 | Any category | highPriority Access |
| 3 | 11, 15 | Any category | highPriority Access |
| 4 | 12,13,14, | Any category | highPriority Access |
| 5 | 0 | 0 (= MT_acc) | mt-Access |
| | | 1 (= delay tolerant) | Not applicable (NOTE 1) |
| | | 2 (= emergency) | emergency |
| | | 3 (= MO_sig) | mo-Signaling |
| | | 4 (= MO MMTel voice) | mo-VoiceCall |
| | | 5 (= MO MMTel video) | mo-VoiceCall |
| | | 6 (= MO SMS and SMSoIP) | mo-Data |
| | | 7 (= MO_data) | mo-Data |
| | | 9 (= MO IMS registration related signaling) | mo-Data |
| | | 10 (= MO exception data) | mo-ExceptionData (NOTE 3) |

### < Problems to be solved through the disclosure of this specification>

In the case of TSN traffic, QoS requirements for latency are very strict. In particular, in the case of specific TSN traffic, a very deterministic transmission delay time needs to be guaranteed, and thus resource allocation and traffic processing measures are essential.

Currently, the access control is performed in the 3GPP 5G system (5GS) in consideration of network congestion between the UE and the wireless section, by distinguishing among 1) Access attempt for MT access) for incoming signaling, or handover of ongoing MMTEL voice call, MMTEL video call or SMSoIP from non-3GPP access, 2) Access attempt for Emergency), 3) Access attempt for MO exception data), 4) Access attempt for delay tolerant, 5) Access attempt for Mobile originated (MO) IMS related signaling, 6) Access attempt for MO MMTEL voice, 7) Access attempt for MO MMTEL video, 8) Access attempt for MO SMS or SMSoIP, 9) Access attempt for MO signaling, 10) Access attempt for MO data, and 11) Access attempt for operator-defined access category (ODAC).

However, there is no method of distinguishing the industrial traffic-related signaling and processing the access control in accordance with the industrial traffic-related QoS and application service requirements.

In conclusion, there is a need for a method of performing the access control by distinguishing signaling for industrial traffic (access control for industrial traffic (signaling and/or data)).

### < Disclosure of this specification>

Accordingly, the disclosure of this specification proposes a method of performing access control by distinguishing signaling for industrial traffic.

The industrial traffic different from the general traffic refers to traffic for time-sensitive/deterministic or ultra-reliable low latency communication (URLLC) or industrial IoT (IIoT) or time-sensitive communication (TSC), or traffic of a related session.

To this end, according to the disclosure of this specification, there is proposed a new access category for MO industrial signaling and/or data.

**[Table 8]**

| Rule # | Types of access attempts | Requirements to be satisfied | Access category |
|---|---|---|---|
| x | MO TSN (or TSC, DetNet, IIoT, URLLC) service request | Access attempt is for mobile originated TSN (or DetNet) signaling and/or data | y (= MO TSN (or TSC, DetNet, IIoT, URLLC)) |

According to the disclosure of this specification, a new RRC establishment cause and/or RRC resumption cause is proposed as follows to distinguish signaling for TSN traffic.

**[Table 9]**

| Access category | RRC establishment cause and/or RRC resumption cause |
|---|---|
| y (=MO TSN (or TSC, DetNet, IIoT, URLLC)) (Access Category) | mo-TSN(or TSC, DetNet, IIoT, URLLC) (RRC establishment cause / RRC resume cause) |

Table 10 shows an example of the rule used when the NAS layer of the terminal determines an applicable access category for the access attempt. In Table 10, a newly added access category is shown according to the disclosure of this specification.

**[Table 10]**

| Rule # | Types of access attempts | Requirements to be satisfied | Access category |
|---|---|---|---|
| x | MO TSN (or TSC, DetNet, IIoT, URLLC) service request | Access attempt is for mobile originated TSN (or TSC, DetNet, IIoT, URLLC) signaling and/or data | y (= MO TSN (or TSC, DetNet, IIoT, URLLC)) |

Table 11 shows the mapping between the access identity/access category and the RRC establishment cause when N1 NAS signaling connection is established through NR connected to 5GCN. In Table 11, newly added access categories and RRC establishment causes are shown according to the disclosure of this specification.

**[Table 11]**

| Rule # | Access identity | Access category | RRC establishment cause to be set |
|---|---|---|---|
| 1 | 1 | Any category | mps-Priority Access |
| 2 | 2 | Any category | mcs-Priority Access |
| 3 | 11, 15 | Any category | highPriority Access |
| 4 | 12,13,14, | Any category | highPriority Access |
| 5 | 0 | 0 (= MT_acc) | mt-Access |
| | | 1 (= delay tolerant) | Not applicable (NOTE 1) |
| | | 2 (= emergency) | emergency |
| | | 3 (= MO_sig) | mo-Signaling |
| | | 4 (= MO MMTel voice) | mo-VoiceCall |
| | | 5 (= MO MMTel video) | mo-VideoCall |
| | | 6 (= MO SMS and SMSoIP) | mo-SMS |
| | | 7 (= MO_data) | mo-Data |
| | | 9 (= MO IMS registration related signaling) | mo-Data |
| | | **y (=MO TSN (or TSC, DetNet, IIoT, URLLC))** | **mo-TSN** (**or** TSC, DetNet, IIoT, URLLC) |

Table 12 shows the mapping between the access identity/access category and the RRC establishment cause when N1 NAS signaling connection is established through E-UTRA connected to 5GCN. In Table 12, newly added access categories and RRC establishment cause are shown according to the disclosure of this specification.

**[Table 12]**

| Rule # | Access identity | Access category | RRC establishment cause to be set |
|---|---|---|---|
| 1 | 1 | Any category | highPriority Access |
| 2 | 2 | Any category | highPriority Access |
| 3 | 11, 15 | Any category | highPriority Access |
| 4 | 12,13,14, | Any category | highPriority Access |
| 5 | 0 | 0 (= MT_acc) | mt-Access |
| | | 1 (= delay tolerant) | Not applicable (NOTE 1) |
| | | 2 (= emergency) | emergency |
| | | 3 (= MO_sig) | mo-Signaling |
| | | 4 (= MO MMTel voice) | mo-VoiceCall |
| | | 5 (= MO MMTel video) | mo-VoiceCall |
| | | 6 (= MO SMS and SMSoIP) | mo-Data |
| | | 7 (= MO_data) | mo-Data |
| | | 9 (= MO IMS registration related signaling) | mo-Data |
| | | 10 (= MO exception data) | mo-ExceptionData (NOTE 3) |
| | | **y (=MO TSN (or** TSC, DetNet, IIoT, URLLC)) | **mo-TSN (or** TSC, DetNet, IIoT, URLLC) |

FIG. 9 illustrates the disclosure of this specification.

Referring to FIG. 9, when congestion occurs in a wireless section between the UE (i.e., terminal) and the base station, the base station (e.g., gNB, eNB, etc.) transmits a first system information block (e.g., SIB1) containing access control related information (information such as UAC category, barring time, barring factor, barring identity, etc.) about TSN (or TSC, DetNet, IIoT, URLLC) signaling and/or data to the UE (i.e., terminal).

When MO TSN (or TSC, DetNet, IIoT, URLLC) signaling or data occurs in the application layer of the UE (i.e., terminal), the application layer notifies the NAS layer through information/indication.

Then, the NAS layer of the UE (i.e., terminal) determines the access category (e.g., Access Category #y) for the MO TSN (or TSC, DetNet, IIoT, URLLC) signaling and/or data, and transmits the determined access category with access identity information to the RRC layer of the UE (i.e., terminal).

The RRC layer of the UE (i.e., terminal) performs checking for the access control (Unified Access Control) based on the access identity and access category information received from the NAS layer, based on the access control-related information (i.e., information such as UAC category, barring time, barring factor, barring identity, etc.) included in the SIB 1 of the base station (gNB, eNB, etc.).

In addition, the RRC layer of the UE (i.e., terminal) determines the RRC establishment/resumption cause based on the access category (e.g. #y) for the MO TSN (or TSC, DetNet, IIoT, URLLC) received from the NAS layer. For example, the RRC layer of the UE (i.e., terminal) checks the RRC establishment/resumption cause (e.g., "mo-TSN (or TSC, DetNet, IIoT, URLLC)") mapped to the access category (e.g. #y) for the MO TSN (or TSC, DetNet, IIoT, URLLC) received from the NAS layer. In addition, the RRC layer of the UE (i.e., terminal) configures the RRC establishment/resumption cause in the RRC message and transmits it to the base station. The RRC message may for example be an RRCSetupRequest message.

Then, the base station performs QoS/Resource/Access Control, etc. based on the RRC message.

When the base station accepts the RRC message, for example, the RRC Setup Request message, the base station transmits the RRC Setup message to the UE (i.e., terminal). Then, the UE (i.e., terminal) transmits an RRC Setup Complete message to the base station.

On the other hand, when the base station rejects the RRC message, for example, the RRC Setup Request message, the base station transmits an RRC Reject message.

The industrial signaling and/or data refers to TSN (or DetNet) or time-sensitive/deterministic or ultra-reliable low latency communication (URLLC) or industrial IoT (IIoT) or time-sensitive communication (TSC) signaling and/or data.

### < SUMMARY OF DISCLOSURES OF THIS SPECIFICATION>

To solve the foregoing problem, an operation method of a terminal is provided. The operation method of the terminal includes: receiving system information including access control-related information about industrial signaling and/or data from a base station; determining an access category based on access identities, upon generation of originating industrial signaling or data; performing a check for unified access control, based on the access category and the access control-related information; determining a radio resource control (RRC) establishment cause or an RRC resumption cause, based on the access category, upon passing the check; and transmitting an RRC message including the determined RRC establishment cause or RRC resumption cause to the base station.

To solve the foregoing problem, a chipset mounted to a terminal is provided. The chipset includes at least one processor; and at least one memory configured to store instructions and operably electrically connectable to the at least one processor, wherein operations performed based on the instructions executed by the at least one processor include: receiving system information including access control-related information about industrial signaling and/or data from a base station; determining an access category based on access identities, upon generation of originating industrial signaling or data; performing a check for unified access control, based on the access category and the access control-related information; determining a radio resource control (RRC) establishment cause or an RRC resumption cause, based on the access category, upon passing the check; and transmitting an RRC message including the determined RRC establishment cause or RRC resumption cause to the base station.

To solve the foregoing problem, an apparatus for a terminal is provided. The apparatus includes a transceiver; at least one processor; and at least one memory configured to store instructions and operably electrically connectable to the at least one processor, wherein operations performed based on the instructions executed by the at least one processor include: receiving system information including access control-related information about industrial signaling and/or data from a base station; determining an access category based on access identities, upon generation of originating industrial signaling or data; performing a check for unified access control, based on the access category and the access control-related information; determining a radio resource control (RRC) establishment cause or an RRC resumption cause, based on the access category, upon passing the check; and transmitting an RRC message including the determined RRC establishment cause or RRC resumption cause to the base station.

The industrial signaling and/or data may include traffic for time sensitive network (TSN), time-sensitive communication (TSC), deterministic networking (DetNet), ultra-reliable low latency communication (URLLC), industrial Internet of things (IIoT).

The determined RRC establishment cause or RRC resumption cause may be used to identify the industrial signaling and/or data.

The access category may be determined to pass the check for the access control with respect to the industrial signaling and/or data.

The determined access category may have high priority so that the check for the access control can be passed with respect to the industrial signaling and/or data.

The RRC message may be transmitted as the check for the access control is passed with respect to the industrial signaling and/or data even upon congestion with the base station in a wireless section.

The terminal may include an application layer, a non-access stratum (NAS) layer, and an RRC layer.

The determining may include: by the NAS layer, determining the access category for the industrial signaling and/or data, upon receiving indication from the upper layer that the industrial signaling and/or data has been generated, and by the NAS layer, transmitting the determined access category and the access identity to the RRC layer.

The RRC layer may perform the check for the access control, based on the access category and access identify received from the NAS layer and the received access control-related information.

Below, an apparatus to which the disclosure of this specification is applicable will be described.

**FIG. 10** **illustrates a block diagram of a processor in which the present disclosure is implemented.**

As may be seen from FIG. 10, the processor 1020 in which the present disclosure is implemented may include a plurality of circuitry to implement functions, procedures and/or methods described in the present disclosure. For example, the processor 1020 may include a first circuit 1020-1, a second circuit 1020-2, and a third circuit 1020-3. Also, although not shown in the figure, the processor 1020 may include more circuits. Each circuit may include a plurality of transistors.

The processor 1020 may be called Application-Specific Integrated Circuit (ASIC) or Application Processor (AP) and may include at least one of a Digital Signal Processor (DSP), a Central Processing Unit (CPU), and a Graphics Processing Unit (GPU).

The processor may be equipped in the UE.

**FIG. 11** **shows a wireless communication system according to an embodiment.**

Referring to FIG. 11, a wireless communication system may include a first device 100a and a second device 100b.

The first device 100a may be a terminal as described in the present disclosure. Or, the first device 100a may be a base station, a network node, a transmitting terminal, a receiving terminal, a wireless device, a wireless communication device, a vehicle, a vehicle equipped with self-driving capability, a connected car, a drone (or an unmanned aerial vehicle (UAV)), an artificial intelligence (AI) module, a robot, an augmented reality (AR) device, a virtual reality (VR) device, a mixed reality (MR) device, a hologram device, a public safety device, an MTC device, an IoT device, a medical device, a FinTech device (or a financial device), a security device, a climate/environment device, a device related to a 5G service, or a device related to a field of the 4th industrial revolution.

The second device 100b may be a network node (e.g., AMF or MME) as described in the present disclosure. The second device 100b may be a base station, a network node, a transmitting terminal, a receiving terminal, a wireless device, a wireless communication device, a vehicle, a vehicle equipped with self-driving capability, a connected car, a drone (or an unmanned aerial vehicle (UAV)), an artificial intelligence (AI) module, a robot, an augmented reality (AR) device, a virtual reality (VR) device, a mixed reality (MR) device, a hologram device, a public safety device, an MTC device, an IoT device, a medical device, a FinTech device (or a financial device), a security device, a climate/environment device, a device related to a 5G service, or a device related to a field of the 4th industrial revolution.

For example, a terminal may include a mobile phone, a smart phone, a laptop computer, a digital broadcasting terminal, a personal digital assistants (PDA), a portable multimedia player (PMP), a navigation, a slate PC, a table PC, an ultrabook, a wearable device (e.g., a smartwatch, a smart glass, a head mounted display (HMD)), or the like. For example, the HMD may be a display device worn on a head. For example, the HMD may be used to implement VR, AR, or MR.

For example, the drone may be an unmanned aerial vehicle which flies by using a radio control signal. For example, the VR device may include a device for realizing an object, background, or the like of a virtual world. For example, theR device may include a device for realizing an object or background of a virtual world by connecting with an object or background or the like of a real world. For example, the MR device may include a device for realizing an object or background of a virtual world by merging an object, background, or the like of a real world. For example, the hologram device may include a device for recording and reproducing stereoscopic information to realize a 360-degree stereoscopic image, by utilizing light interference which occurs when two laser beams called holography are met. For example, the public safety device may include an image relay device or an image device or the like which may be worn on a user's body. For example, the MTC device and the IoT device may be devices not requiring direct human intervention or manipulation. For example, the MTC device and the IoT device may include a smart meter, a bending machine, a thermometer, a smart bulb, a door lock, or various sensors. For example, the medical device may be a device used for diagnosing, curing, alleviating, treating, or preventing a disease. For example, the medial device may be a device used for diagnosing, curing, alleviating or ameliorating an injury or disorder. For example, the medial device may be a device used for inspecting, replacing, or modifying a structure or function. For example, the medical device may be a device used for controlling pregnancy. For example, the medical device may include a diagnostic device, a surgical device, a (in vitro) diagnostic device, a hearing aid, or a treatment device. For example, the security device may be a device installed to prevent potential hazards and maintain security. For example, the security device may be a camera, a CCTV, a recorder, or a black box. For example, the Fin-Tech device may be a device capable of providing financial services such as mobile payment. For example, the Fin-tech device may include a payment device or a point of sales (POS). For example, the climate/environmental device may include a device for monitoring or predicting climates/environments.

The first device 100a may include at least one processor such as a processor 1020a, at least one memory such as a memory 1010a, and at least one transceiver such as a transceiver 1031a. The processor 1020a may perform the aforementioned functions, procedures, and/or methods. The processor 1020a may perform one or more protocols. For example, the processor 1020a may perform one or more layers of a radio interface protocol. The memory 1010a may be coupled to the processor 1020a, and may store various types of information and/or commands. The transceiver 1031a may be coupled to the processor 1020a, and may be controlled to transmit/receive a radio signal.

The second device 100b may include at least one processor such as a processor 1020b, at least one memory such as a memory 1010b, and at least one transceiver such as a transceiver 1031b. The processor 1020b may perform the aforementioned functions, procedures, and/or methods. The processor 1020b may perform one or more protocols. For example, the processor 1020b may perform one or more layers of a radio interface protocol. The memory 1010b may be coupled to the processor 1020b, and may store various types of information and/or commands. The transceiver 1031b may be coupled to the processor 1020b, and may be controlled to transmit/receive a radio signal.

The memory 1010a and/or the memory 1010b may be connected internally or externally to the processor 1020a and/or the processor 1020b, respectively, or may be connected to other processors through various techniques such as wired or wireless connections.

The first device 100a and/or the second device 100b may have one or more antennas. For example, an antenna 1036a and/or an antenna 1036b may be configured to transmit/receive a radio signal.

**FIG. 12** **is a block diagram of a network node according to an embodiment.**

In particular, FIG. 12 illustrates in detail the case where a base station is divided into a Central Unit (CU) and a Distributed Unit (DU).

Referring to FIG. 12, base stations W20 and W30 may be connected to a core network W10, and the base station W30 may be connected to the neighboring base station W20. For example, an interface between the base stations W20 and W30 and the core network W10 may be referred to as NG, and an interface between the base station W30 and the neighboring base station W20 may be referred to as Xn.

The base station W30 may be divided into a CU W32 and DUs W34 and W36. That is, the base station W30 may be managed by being separated in a layered manner. The CU W32 may be connected to one or more DUs W34 and W36. For example, an interface between the CU W32 and the DUs W34 and W36 may be referred to as F1. The CU W32 may perform a function of higher layers of the base station, and the DUs W34 and W36 may perform a function of lower layers of the base station. For example, the CU W32 may be a logical node for hosting radio resource control (RRC), service data adaptation protocol (SDAP), and packet data convergence protocol (PDCP) layers of the base station (e.g., gNB), and the DUs W34 and W36 may be a logical node for hosting radio link control (RLC), media access control (MAC), and physical (PHY) layers of the base station. Alternatively, the CU W32 may be a logical node for hosting RRC and PDCP layers of the base station (e.g., en-gNB).

Operations of the DUs W34 and W36 may be partially controlled by the CU W32. One DU W34 or W36 may support one or more cells. One cell may be supported only by one DU W34 or W36. One DU W34 or W36 may be connected to one CU W32, and one DU W34 or W36 may be connected to a plurality of CUs by proper implementation.

**FIG. 13** **is a block diagram showing a structure of a UE 100 according to an embodiment.**

In particular, FIG. 13 shows an example of the first device of FIG. 12 in greater detail.

A terminal includes a memory 1010, a processor 1020, a transceiver 1031, a power management module 1091, a battery 1092, a display 1041, an input unit 1053, a speaker 1042, a microphone 1052, a subscriber identification module (SIM) card, and one or more antennas.

The processor 1020 may be configured to implement the proposed functions, procedures, and/or methods described in the present specification. Layers of a radio interface protocol may be implemented in the processor 1020. The processor 1020 may include application-specific integrated circuits (ASICs), other chipsets, logic circuits, and/or data processing units. The processor 1020 may be an application processor (AP). The processor 1020 may include at least one of a digital signal processor (DSP), a central processing unit (CPU), a graphics processing unit (GPS), and a modulator and demodulator (modem). An example of the processor 1020 may include an SNAPDRAGONTM series processor manufactured by Qualcomm^{®}, an EXYNOSTM series processor manufactured by Samsung^{®}, an A series processor manufactured by Apple^{®}, a HELIOTM series processor manufactured by MediaTek^{®}, an ATOMTM series processor manufactured by INTEL^{®}, or a corresponding next-generation processor.

The power management module 1091 manages power for the processor 1020 and/or the transceiver 1031. The battery 1092 supplies power to the power management module 1091. The display 1041 outputs a result processed by the processor 1020. The input unit 1053 receives an input to be used by the processor 1020. The input unit 1053 may be displayed on the display 1041. The SIM card is an integrated circuit used to safely store an international mobile subscriber identity (IMSI) used to identify and authenticate a subscriber and a key related thereto in a portable phone and a portable phone device such as a computer. Contacts information may be stored in many SIM cards.

The memory 1010 is operatively coupled to the processor 1020, and stores a variety of information for operating the processor 1020. The memory 1010 may include a read-only memory (ROM), a random access memory (RAM), a flash memory, a memory card, a storage medium, and/or other equivalent storage devices. When the embodiment is implemented in software, the techniques explained in the present specification may be implemented with a module (i.e., procedure, function, etc.) for performing the functions explained in the present specification. The module may be stored in the memory 1010 and may be performed by the processor 1020. The memory 1010 may be implemented inside the processor 1020. Alternatively, the memory 1010 may be implemented outside the processor 1020, and may be coupled to the processor 1020 in a communicable manner by using various well-known means.

The transceiver 1031 is operatively coupled to the processor 1020, and transmits and/or receives a radio signal. The transceiver 1031 includes a transmitter and a receiver. The transceiver 1031 may include a baseband signal for processing a radio frequency signal. The transceiver controls one or more antennas to transmit and/or receive a radio signal. In order to initiate communication, the processor 1020 transfers command information to the transceiver 1031, for example, to transmit a radio signal constituting voice communication data. The antenna serves to transmit and receive a radio signal. When the radio signal is received, the transceiver 1031 may transfer a signal to be processed by the processor 1020, and may convert the signal into a baseband signal. The processed signal may be converted into audible or readable information which is output through the speaker 1042.

The speaker 1042 outputs a result related to a sound processed by the processor 1020. The microphone 1052 receives a sound-related input to be used by the processor 1020.

A user presses (or touches) a button of the input unit 1053 or drives voice (activates voice) by using the microphone 1052 to input command information such as a phone number or the like. The processor 1020 receives the command information, and performs a proper function such as calling the phone number or the like. Operational data may be extracted from the SIM card or the memory 1010. In addition, the processor 1020 may display command information or operational information on the display 1041 for user's recognition and convenience.

**FIG. 14** **is a detailed block diagram illustrating a transceiver of the first device shown in** **FIG. 11** **or a transceiver of the UE shown in** **FIG. 13****.**

Referring to FIG. 14, a transceiver 1031 includes a transmitter 1031-1 and a receiver 1031-2. The transmitter 1031-1 includes a Discrete Fourier Transform (DFT) unit 1031-11, a subcarrier mapper 1031-12, an IFFT unit 1031-13, a CP insertion unit 1031-14, a wireless transmitter 1031-15. In addition, the transceiver 1031 may further include a scramble unit (not shown), a modulation mapper (not shown), a layer mapper (not shown), and a layer permutator, and the transceiver 1031 may be disposed in front of the DFT unit 1031-11. That is, in order to prevent a peak-to-average power ratio (PAPR) from increasing, the transmitter 1031-1 may transmit information to pass through the DFT unit 1031-11 before mapping a signal to a subcarrier. A signal spread (or pre-coded for the same meaning) by the DFT unit 1031-1 is subcarrier-mapped by the subcarrier mapper 1031-12, and then generated as a time domain signal by passing through the IFFT unit 1031-13.

The DFT unit 1031-1 performs DFT on input symbols to output complex-valued symbols. For example, if Ntx symbols are input (here, Ntx is a natural number), a DFT size may be Ntx. The DFT unit 1031-11 may be called a transform precoder. The subcarrier mapper 1031-12 maps the complex-valued symbols to subcarriers of a frequency domain. The complex-valued symbols may be mapped to resource elements corresponding to a resource block allocated for data transmission. The subcarrier mapper 1031-12 may be called a resource element mapper. The IFFT unit 1031-3 may perform IFFT on input symbols to output a baseband signal for data, which is a time-domain signal. The CP inserter 1031-14 copies a rear portion of the baseband signal for data and inserts the copied portion into a front part of the baseband signal. The CP insertion prevents Inter-Symbol Interference (ISI) and Inter-Carrier Interference (ICI), and therefore, orthogonality may be maintained even in multi-path channels.

Meanwhile, the receiver 1031-2 includes a wireless receiver 1031-21, a CP remover 1031-22, an FFT unit 1031-23, and an equalizer 1031-24, and so on. The wireless receiver 1031-21, the CP remover 1031-22, and the FFT unit 1031-23 of the receiver 1031-2 performs functions inverse to functions of the wireless transmitter 1031-15, the CP inserter 1031-14, and the IFFT unit 1031-3 of the transmitter 1031-1. The receiver 1031-2 may further include a demodulator.

### <Scenarios to which the disclosure of this specification may be applied>

Although not limited thereto, the various descriptions, functions, procedures, suggestions, methods, and/or operational flowcharts of the disclosure disclosed herein may be applied to various fields requiring wireless communication/connection (e.g., 5G) between devices. It may be applied.

Hereinafter, a more detailed example will be provided with reference to the drawings. In the following drawings/descriptions, identical reference numerals may illustrate identical or corresponding hardware blocks, software blocks, or functional blocks, unless otherwise indicated.

FIG. 15 illustrates a communication system 1 to which the disclosure of this specification applies.

Referring to FIG. 15, the communication system 1 to which the disclosure of this specification applies includes a wireless device, a base station, and a network. Here, a wireless device refers to a device that performs communication using wireless access technology (e.g., 5G NR (New RAT), LTE (Long Term Evolution)) and may be referred to as a communication/wireless/5G device. Although not limited thereto, wireless devices include robots (100a), vehicles (100b-1, 100b-2), XR (eXtended Reality) devices (100c), hand-held devices (100d), and home appliances (100e). ), IoT (Internet of Thing) device (100f), and AI device/server (400). For example, vehicles may include vehicles equipped with wireless communication functions, autonomous vehicles, vehicles capable of inter-vehicle communication, etc. Here, the vehicle may include an Unmanned Aerial Vehicle (UAV) (eg, a drone). XR devices include AR (Augmented Reality)/VR (Virtual Reality)/MR (Mixed Reality) devices, HMD (Head-Mounted Device), HUD (Head-Up Display) installed in vehicles, televisions, smartphones, It may be implemented in the form of computers, wearable devices, home appliances, digital signage, vehicles, robots, etc. Portable devices may include smartphones, smart pads, wearable devices (e.g., smartwatches, smart glasses), and computers (e.g., laptops, etc.). Home appliances may include TVs, refrigerators, washing machines, etc. IoT devices may include sensors, smart meters, etc. For example, a base station and network may also be implemented as wireless devices, and a specific wireless device 200a may operate as a base station/network node for other wireless devices.

Wireless devices 100a to 100f may be connected to the network 300 through the base station 200. AI (Artificial Intelligence) technology may be applied to wireless devices (100a to 100f), and the wireless devices (100a to 100f) may be connected to the AI server 400 through the network 300. The network 300 may be configured using a 3G network, 4G (eg, LTE) network, or 5G (eg, NR) network. Wireless devices 100a to 100f may communicate with each other through the base station 200/network 300, but may also communicate directly (e.g. sidelink communication) without going through the base station/network. For example, vehicles 100b-1 and 100b-2 may communicate directly (e.g. V2V (Vehicle to Vehicle)/V2X (Vehicle to everything) communication). Additionally, an IoT device (eg, sensor) may communicate directly with another IoT device (eg, sensor) or another wireless device (100a to 100f).

Wireless communication/connection (150a, 150b, 150c) may be established between the wireless devices (100a to 100f)/base station (200) and the base station (200)/base station (200). Here, wireless communication/connection includes various wireless connections such as uplink/downlink communication (150a), sidelink communication (150b) (or D2D communication), and inter-base station communication (150c) (e.g. relay, IAB (Integrated Access Backhaul)). This may be achieved through technology (e.g., 5G NR). Through wireless communication/connection (150a, 150b, 150c), a wireless device and a base station/wireless device, and a base station and a base station may transmit/receive wireless signals to each other. Example For example, wireless communication/ connection 150a, 150b, 150c may transmit/receive signals through various physical channels. To this end, based on the various proposals of the disclosure herein, transmit/receive wireless signals At least some of various configuration information setting processes, various signal processing processes (e.g., channel encoding/decoding, modulation/demodulation, resource mapping/demapping, etc.), resource allocation processes, etc. may be performed.

In the above, preferred embodiments have been described by way of example, but the disclosure of the present specification is not limited to these specific embodiments, and may be modified, changed, or modified in various forms within the scope described in the spirit and claims of the present specification. It may be improved.

In the example system described above, the methods are described on the basis of a flow chart as a series of steps or blocks, but the order of steps described is not limited, and some steps may occur simultaneously or in a different order than other steps as described above. there is. Additionally, those skilled in the art will understand that the steps shown in the flowchart are not exclusive and that other steps may be included or one or more steps in the flowchart may be deleted without affecting the scope of rights.

The claims set forth herein may be combined in various ways. For example, the technical features of the method claims of this specification may be combined to implement a device, and the technical features of the device claims of this specification may be combined to implement a method. Additionally, the technical features of the method claims of this specification and the technical features of the device claims may be combined to implement a device, and the technical features of the method claims of this specification and technical features of the device claims may be combined to implement a method.

## Claims

1. An operation method of a terminal, comprising:
receiving system information comprising access control-related information about industrial signaling and/or data from a base station;
determining an access category based on access identities, upon generation of originating industrial signaling or data;
performing a check for unified access control, based on the access category and the access control-related information;
determining a radio resource control (RRC) establishment cause or an RRC resumption cause, based on the access category, upon passing the check; and
transmitting an RRC message comprising the determined RRC establishment cause or RRC resumption cause to the base station.

2. The method of claim 1, wherein the industrial signaling and/or data comprises traffic for time sensitive network (TSN), time-sensitive communication (TSC), deterministic networking (DetNet), ultra-reliable low latency communication (URLLC), industrial Internet of things (IIoT).

3. The method of claim 1, wherein the determined RRC establishment cause or RRC resumption cause is used to identify the industrial signaling and/or data.

4. The method of claim 1, wherein the access category is determined to pass the check for the access control with respect to the industrial signaling and/or data.

5. The method of claim 1, wherein the determined access category has high priority so that the check for the access control can be passed with respect to the industrial signaling and/or data.

6. The method of claim 1, wherein the RRC message is transmitted as the check for the access control is passed with respect to the industrial signaling and/or data even upon congestion with the base station in a wireless section.

7. The method of claim 1, wherein the terminal comprises an application layer, a non-access stratum (NAS) layer, and an RRC layer.

8. The method of claim 7, wherein the determining comprises:
by the NAS layer, determining the access category for the industrial signaling and/or data, upon receiving indication from the upper layer that the industrial signaling and/or data has been generated, and
by the NAS layer, transmitting the determined access category and the access identity to the RRC layer.

9. The method of claim 8, wherein the RRC layer performs the check for the access control, based on the access category and access identify received from the NAS layer and the received access control-related information.

10. A chipset mounted to a terminal, comprising:
at least one processor; and
at least one memory configured to store instructions and operably electrically connectable to the at least one processor, wherein operations performed based on the instructions executed by the at least one processor comprise:
receiving system information comprising access control-related information about industrial signaling and/or data from a base station;
determining an access category based on access identities, upon generation of originating industrial signaling or data;
performing a check for unified access control, based on the access category and the access control-related information;
determining a radio resource control (RRC) establishment cause or an RRC resumption cause, based on the access category, upon passing the check; and
transmitting an RRC message comprising the determined RRC establishment cause or RRC resumption cause to the base station.

11. The chipset of claim 10, wherein the industrial signaling and/or data comprises traffic for time sensitive network (TSN), time-sensitive communication (TSC), deterministic networking (DetNet), ultra-reliable low latency communication (URLLC), or industrial Internet of things (IIoT).

12. The chipset of claim 10, wherein the determined RRC establishment cause or RRC resumption cause is used to identify the industrial signaling and/or data.

13. The chipset of claim 10, wherein the access category is determined to pass the check for the access control with respect to the industrial signaling and/or data.

14. The chipset of claim 10, wherein the determined access category has high priority so that the check for the access control can be passed with respect to the industrial signaling and/or data.

15. The chipset of claim 10, wherein the RRC message is transmitted as the check for the access control is passed with respect to the industrial signaling and/or data even upon congestion with the base station in a wireless section.

16. An apparatus for a terminal, comprising:
a transceiver;
at least one processor; and
at least one memory configured to store instructions and operably electrically connectable to the at least one processor, wherein operations performed based on the instructions executed by the at least one processor comprise:
receiving system information comprising access control-related information about industrial signaling and/or data from a base station;
determining an access category based on access identities, upon generation of originating industrial signaling or data;
performing a check for unified access control, based on the access category and the access control-related information;
determining a radio resource control (RRC) establishment cause or an RRC resumption cause, based on the access category, upon passing the check; and
transmitting an RRC message comprising the determined RRC establishment cause or RRC resumption cause to the base station.

17. The apparatus of claim 16, wherein the industrial signaling and/or data comprises traffic for time sensitive network (TSN), time-sensitive communication (TSC), deterministic networking (DetNet), ultra-reliable low latency communication (URLLC), industrial Internet of things (IIoT).

18. The apparatus of claim 16, wherein the determined RRC establishment cause or RRC resumption cause is used to identify the industrial signaling and/or data.

19. The apparatus of claim 16, wherein the determined access category has high priority so that the check for the access control can be passed with respect to the industrial signaling and/or data.

20. The apparatus of claim 16, wherein the RRC message is transmitted as the check for the access control is passed with respect to the industrial signaling and/or data even upon congestion with the base station in a wireless section.
